# EUROPÄISCHE PATENTSCHRIFT

(11) **EP 4 199 026 B1**
(45) Veröffentlichungstag und Bekanntmachung des Hinweises auf die Patenterteilung: **10.09.2025**
(21) Anmeldenummer: 22210880.5
(22) Anmeldetag: 01.12.2022
(51) Int. Cl.: H01H 71/28, H01H 3/28, B60L 3/00, B60L 3/04, H01H 5/02, H01H 9/54, H01H 51/22

(54) **SCHUTZSCHALTER**
CIRCUIT BREAKER
DISJONCTEUR

(30) Priorität: 17.12.2021 DE 102021214614
(43) Veröffentlichungstag der Anmeldung: 21.06.2023
(73) Patentinhaber: Ellenberger & Poensgen GmbH, 90518 Altdorf (DE)
(72) Erfinder: KÖPF, Hendrik-Christian, 90480 Nürnberg (DE); HOFMEISTER, Lothar, 92318 Neumarkt (DE); ENGEWALD, Manuel, 90411 Nürnberg (DE); MIKLIS, Markus, 90592 Schwarzenbruck (DE); PIMENTA, Ricardo, 90542 Eckental (DE); WATZLAWICK, Michael, 90425 Nürnberg (DE); HIERETH, Fabian, 92283 Lauterhofen (DE)
(74) Vertreter: FDST Patentanwälte

(56) Entgegenhaltungen:
- EP-A2- 0 483 591
- WO-A1-2009/138603
- WO-A2-99/10902
- DE-A1- 19 851 226
- DE-B3- 10 244 961
- DE-U1- 202016 102 682
- US-A- 2 905 792

## Beschreibung

Die Erfindung betrifft ein Schutzschalter mit einem in einen Hauptstrompfad eingebrachten mechanischen Schalter. Ferner betrifft die Erfindung ein Kraftfahrzeug mit einem Schutzschalter.

In zunehmendem Maße weisen Kraftfahrzeuge, wie Nutzkraftwagen, also Busse oder Lastkraftwagen (Lkw) einen oder mehrere Elektromotoren als Hauptantrieb auf, der direkt der Fortbewegung dient. Zum Betrieb des oder der Elektromotoren ist meist eine Hochvoltbatterie vorgesehen, mittels derer eine Gleichspannung in einer Höhe zwischen 400 V und 800 V bereitgestellt wird. Die zwischen der Hochvoltbatterie und dem Elektromotor geführten elektrischen Ströme betragen bei Betrieb dabei mehrere 10 A.

Im Fehlerfall, wie bei einem Kurzschluss oder einem Unfall, ist es erforderlich, die Hochvoltbatterie elektrisch von weiteren Bestandteilen des Kraftfahrzeugs, wie dem Elektromotor, zu trennen. Hierfür wird üblicherweise ein Schutzschalter herangezogenen, der einen Schalter aufweist, der in einen zwischen der Hochvoltbatterie und dem Elektromotor vorhandenen Hauptstrompfad eingebracht ist. Der Schutzschalter ist dabei derart ausgestaltet, dass bei Überschreiten eines bestimmten Grenzwerts durch den mittels des Hauptstrompfads geführten elektrischen Strom, der Schalter betätigt wird, sodass der elektrische Stromfluss unterbunden wird.

Als Schalter ist zum Beispiel ein Halbleiterschalter vorgesehen. Bei diesem treten jedoch während des Betriebs vergleichsweise hohe elektrische Verluste auf, was den Wirkungsgrad und somit auch die Reichweite des Kraftfahrzeugs verringert.

Alternativ hierzu ist als Schalter ein (mechanisches) Relais vorgesehen, das einen Festkontakt und einen dazu beweglich gelagerten Bewegkontakt aufweist. Der Bewegkontakt ist hierbei meist an einer Kontaktbrücke angebunden, die mittels einer als Elektromagnet wirkenden elektrischen Spule angetrieben ist. Aufgrund dessen ist eine Trägheit vergrößert, sodass der Schalter eine vergleichsweise langsame Schaltzeit aufweist. Zum Vermeiden hiervon ist es möglich, eine elektrische Spule mit einer vergleichsweise hohen Windungszahl heranzuziehen, was jedoch zu erhöhten Herstellungskosten führt. Auch ist auf diese Weise die auf die Kontaktbrücke wirkende Kraft vergleichsweise hoch, weswegen eine mechanische Belastung vergrößert ist.

In WO019990/10902 A2 zeigt einen Schutzschalter, der ein PTC-Element aufweist.

Aus DE 198 51 226 A1 ist ein Trennschalter zum Unterbrechen des Stromflusses in einem Stromleiter bei Überstrom oder Kurzschluß bekannt. Dieser umfasst eine Kontaktbrücke, die bei Stromfluß an dem in diesem Bereich getrennten Stromleiter anliegt, und eine magnetisch leitfähige Scheibe, die zusammen mit einer an einen Energiespeicher angeschlossenen Spule einen magnetodynamischen Antrieb bildet.

In EP 0 483 591 A2 ist ein Niederspannungsschaltgerät mit einem ein- oder mehrpoligen Kontaktsystem mit einer entsprechenden Anzahl von Festkontakten und beweglichen Kontakten, einem die beweglichen Kontakte bewegenden Magnetanker, mindestens einer gleichstromerregten Magnetspule und einem Sollschaltauslöser bekannt. Der Magnetanker arbeitet bistabil.

WO 2009/138603 A1 zeigt einen Schutzschalter. Dieser umfasst eine Eingangsleitung, eine Ausgangsleitung, mindestens eine statische Schaltvorrichtung, die die Eingangsleitung mit der Ausgangsleitung verbindet, und eine Steuerschaltung, die mit dem statischen Schalter und einer Vorrichtung zur Messung einer elektrischen Eigenschaft in der Ausgangsleitung verbunden ist.

In DE 20 2016 102 682 U1 ist ein Schutzschalter zur Gleichstromunterbrechung, insbesondere eines Bordnetzes eines Fahrzeugs, offenbart. Dieser umfasst einen Hauptstrompfad, der einen Schalter aufweist, und ein Reed-Relais zur Erfassung eines elektrischen Stromflusses über den Hauptstrompfad.

DE 102 44 961 B3 zeigt einen selektiven Leitungsschutzschalter. Der Leitungsschutzschalter hat eine Hauptstrombahn mit Hauptstromwicklung, Hauptkontakte, einem Magnetauslöser für die Hauptkontakte und eine Nebenstrombahn mit Nebenkontakten, wobei den Haupt- und Nebenkontakten ein Schaltschloss zum Schließen oder Öffnen der Kontakte zugeordnet ist.

US 2,905,792 zeigt eine Lichtbogenschachtkonstruktion mit belastbaren Abstandhaltern.

Der Erfindung liegt die Aufgabe zugrunde, einen besonders geeigneten Schutzschalter und ein besonders geeignetes Kraftfahrzeug anzugeben, wobei vorteilhafterweise eine Sicherheit erhöht und/oder Herstellungskosten sowie eine Belastung als auch bei Betrieb auftretende Verluste reduziert sind.

Hinsichtlich des Schutzschalters wird diese Aufgabe durch die Merkmale des Anspruchs 1 und hinsichtlich des Kraftfahrzeugs durch die Merkmale des Anspruchs 8 erfindungsgemäß gelöst. Vorteilhafte Weiterbildungen und Ausgestaltungen sind Gegenstand der jeweiligen Unteransprüche.

Der Schutzschalter dient insbesondere der Absicherung, also dem Schutz, einer elektrischen Leitung und/oder einer Komponente, wie eines Geräts. Mit anderen Worten handelt sich bei dem Schutzschalter somit um einen Leitungsschutzschalter bzw. einen Geräteschutzschalter.

Der Schutzschalter weist einen Hauptstrompfad auf, in den ein mechanischer Schalter eingebracht ist. Mittels des Hauptstrompfads wird dabei bei Betrieb ein elektrischer Strom geführt, und/oder an diesem liegt eine elektrische Spannung an, wobei im Fehlerfall, also wenn die Absicherung erforderlich ist, der elektrische Stromfluss über den Hauptstrompfad insbesondere unterbrochen werden soll. Vorzugsweise ist der Hauptstrompfad zumindest teilweise mittels einer Stromschiene gebildet, die beispielsweise aus einem Metall, vorzugsweise einem Kupfer, wie reinem Kupfer oder eine Kupferlegierung, zum Beispiel Messing, gefertigt ist. Zweckmäßigerweise weist der Schutzschalter zumindest zwei Anschlüsse auf, mittels derer der Hauptstrompfad mit weiteren Komponenten im Montagezustand verbunden ist. Die Anschlüsse sind zum Beispiel zueinander baugleich oder unterschiedlich und beispielsweise jeweils ein Schraub- oder Steckanschluss.

Der mechanische Schalter, der im Weiteren insbesondere auch lediglich als Schalter bezeichnet ist, weist einen Festkontakt und einen Bewegkontakt auf, der an einer bezüglich des Festkontakts beweglich gelagerten Kontaktbrücke angebunden ist. Folglich ist auch ist der Bewegkontakt beweglich zum Festkontakt gelagert, nämlich mittels der Kontaktbrücke. Beispielsweise ist der Bewegkontakt an der Kontaktbrücke festgeschweißt und zum Beispiel einstückig mit dieser. Alternativ hierzu ist der Bewegkontakt aus einem von der Kontaktbrücke abweichenden Material gefertigt. Beispielsweise ist der Festkontakt festgehalten und dessen Position somit starr. Alternativ hierzu ist auch die Position des Festkontakts variabel, und dieser ist zum Beispiel mittels einer weiter Brücke oder sonstiger mechanischen Gegebenheiten beweglich gelagert.

Vorzugsweise umfasst der Schutzschalter ein Gehäuse, das zum Beispiel aus einem Kunststoff gefertigt ist, und innerhalb dessen sowohl der Festkontakt als auch der Bewegkontakt angeordnet ist. Hierbei ist die Kontaktbrücke zweckmäßigerweise mittels eines Scharniers oder sonstigen Lagers an dem Gehäuse gelagert, beispielsweise eines Gleitlagers. In einer Weiterbildung ist mittels des Gehäuses selbst eine Führung gebildet, mittels derer die Kontaktbrücke gelagert ist. Der Festkontakt ist besonders bevorzugt starr an dem Gehäuse oder zumindest unbeweglich bezüglich des Gehäuses angeordnet, weswegen eine Konstruktion vereinfacht ist. Zum Beispiel ist die Kontaktbrücke mechanisch direkt mit einer starren (etwaigen) Stromschiene des Hauptstrompfads verbunden und somit insbesondere mit einem der etwaigen Anschlüsse. Zur beweglichen Lagerung ist die Kontaktbrücke dabei zweckmäßigerweise schwenkbar gelagert.

Besonders bevorzugt jedoch ist die Kontaktbrücke mittels eines Stanzbiegeteils, oder eines sonstigen Metallstreifens gebildet und transversal verschieblich gelagert. Zweckmäßigerweise ist dabei an der Kontaktbrücke ein weiterer Bewegkontakt angebunden. Dem weiteren Bewegkontakt ist zweckmäßigerweise ein weiterer Festkontakt zugeordnet, und beim Bewegen der Kontaktbrücke wird geeigneterweise ein mechanischer Kontakt zwischen dem Bewegkontakt und dem Festkontakt sowie zwischen dem weiteren Bewegkontakt und dem weiteren Festkontakt erstellt oder aufgehoben, insbesondere je nach Bewegungsrichtung der Kontaktbrücke.

Zusammenfassend ist, wenn der mechanische Kontakt zwischen dem Bewegkontakt und dem Festkontakt besteht, der mechanische Schalter geschlossen und elektrisch leitend. Wenn der Bewegkontakt mittels der Kontaktbrücke von dem Festkontakt beabstandet ist, ist der Schalter geöffnet und elektrisch nicht leitend. Somit ist der Schalter, je nach Position (Zustand) der Kontaktbrücke, entweder in dem geöffneten oder geschlossenen Zustand oder zum Beispiel einer Position dazwischen. In dieser ist der Abstand zwischen dem Bewegkontakt und dem Festkontakt nicht maximal, jedoch ist keine mechanische Anlage zwischen diesen vorhanden. Beispielsweise umfasst der Schalter eine Arretierung oder sonstige Verklinkung, mittels derer die Kontaktbrücke in dem geöffneten oder geschlossenen Zustand arretiert ist. Mit anderen Worten ist der Schalter somit monostabil oder bistabil ausgestaltet. Sofern die Arretierung lediglich in einem der Zustände erfolgt, ist dieser beispielsweise der geschlossene oder geöffnete Zustand. Aufgrund der Arretierung/Verklinkung ist es erforderlich, eine Kraft zum Verbringen der Kontaktbrücke, also zum Betätigen des Schalters, aufzuwenden, sodass ein unbeabsichtigtes Betätigen des (mechanischen) Schalters, beispielsweise aufgrund einer Vibration des Schutzschalters, ausgeschlossen ist.

Der Schutzschalter umfasst ferner einen Antrieb, der in Wirkverbindung mit der Kontaktbrücke ist. Mittels Betätigung des Antriebs ist es möglich, die Kontaktbrücke von zumindest einer der beiden Positionen in die andere, also die geschlossene bzw. geöffnete, zu bewegen. Mit anderen Worten ist es möglich, mittels Betätigung des Antriebs, den Schalter zu schalten.

Der Antrieb weist eine erste Antriebseinheit und eine zweite Antriebseinheit auf, die insbesondere separat voneinander betreibbar oder betrieben sind, oder die zumindest abhängig von unterschiedlichen Gegebenheiten/Umständen aktiv sind, sodass die Kontaktbrücke bewegt wird. Hierbei ist die erste Antriebseinheit mittels eines Steuerkreises bestromt. Mit anderen Worten ist zur Versorgung der ersten Antriebseinheit der Steuerkreis vorgesehen, mittels dessen die erste Antriebseinheit somit gespeist ist. Besonders bevorzugt ist der Steuerkreis galvanisch von dem Hauptstromkreis getrennt, sodass in einem Fehlerfall in dem Hauptstrompfad eine Rückwirkung auf den Steuerkreis unterbunden ist. Somit kann das Bestromen der ersten Antriebseinheit im Wesentlichen ungestört erfolgen. Der Steuerkreis ist beispielsweise über den Hauptstrompfad gespeist, insbesondere mittels eines Transformators. In einer Weiterbildung ist der Steuerkreis mittels einer separaten Energiequelle gespeist, und der Schutzschalter weist hierfür insbesondere weitere Anschlüsse auf, die zum Beispiel in das etwaige Gehäuse des Schutzschalters eingebracht sind. Zweckmäßigerweise weist der Steuerkreis ein Spannungsniveau auf, das von dem Spannungsniveau, oder zumindest dem elektrischen Potential, abweicht, das mit dem Hauptstrompfad geführt ist. Insbesondere wird hierbei der Steuerkreis mit einer geringeren elektrischen Spannung betrieben. Somit ist eine Konstruktion des Schutzschalters vereinfacht.

Die zweite Antriebseinheit ist (elektrisch) parallel zu einem in den Hauptstrompfad eingebrachten Widerstandselement geschaltet. Somit ist es möglich, die zweite Antriebseinheit mittels des über den Hauptstrompfad geführten elektrischen Stroms zu bestromen. Dies erfolgt hierbei insbesondere, wenn die über dem Widerstandselement abfallende elektrische Spannung größer als die über der zweiten Antriebseinheit abfallenden elektrische Spannung ist. Zweckmäßigerweise ist hierbei das Widerstandselement derart ausgewählt/aufgebaut/ausgestaltet, dass im Normalfall die über dem Widerstandselement abfallende elektrische Spannung geringer als die über der zweiten Antriebseinheit abfallende elektrische Spannung ist, vorzugsweise um ein Vielfaches geringer. Somit wird der mittels des Hauptstrompfads geführte elektrische Strom im Wesentlichen lediglich mittels des Widerstandselements lediglich geführt.

Im Fehlerfall jedoch ist vorzugsweise die über der zweiten Antriebseinheit abfallende elektrische Spannung geringer als die über dem Widerstandselement abfallende elektrische Spannung, sodass eine Bestromung der zweiten Antriebseinheit erfolgt. Somit erfolgt im Fehlerfall, also beispielsweise bei einer Überlast oder einem Überstrom, mittels der zweiten Antriebseinheit eine Beeinflussung der Position der Kontaktbrücke.

Aufgrund der beiden Antriebseinheiten ist es somit möglich, den Schutzschalter unabhängig von dem Fehlerfall zu betätigen, sodass ein Einsatzbereich vergrößert ist. Zweckmäßigerweise ist die mittels der ersten Antriebseinheit bereitgestellte Kraft vergleichsweise gering, sodass bei deren Betrieb die Schaltzeit vergleichsweise langsam ist, wobei jedoch eine mechanische Belastung verringert ist. Daher ist es möglich, eine vergleichsweise leistungsschwache erste Antriebseinheit heranzuziehen, weswegen Herstellungskosten reduziert sind. Wenn der Fehlerfall auftritt, ist mittels der erste Antriebseinheit ein Veranlassen einer Bewegung der Kontaktbrücke und somit ein Öffnen des mechanischen Schalters möglich. Jedoch wirkt auch die zweite Antriebseinheit unterstützend. Zweckmäßigerweise ist dabei die zweite Antriebseinheit derart ausgestaltet, dass im Fehlerfall eine vergleichsweise große Kraft ausgeübt wird, die insbesondere größer als die mittels der erste Antriebseinheit bereitgestellte Kraft ist. Infolgedessen weist der Schutzschalter eine vergleichsweise geringe Schaltzeit auf, weswegen eine Sicherheit erhöht ist. Das Bereitstellen der vergrößerten Kraft ist insbesondere aufgrund des mittels des Hauptstrompfads geführten vergleichsweise großen elektrischen Stroms möglich. Dabei wird im Normalbetrieb mittels der zweiten Antriebseinheit bevorzugt im Wesentlichen kein elektrischer Strom geführt, und der elektrische Strom wird in diesem Fall zweckmäßigerweise lediglich oder zumindest vorwiegend mittels des Widerstandselements geführt. Somit sind auftretende (elektrische) Verluste bei (Normal-) Betrieb vergleichsweise gering. Auch ist aufgrund der beiden Antriebseinheiten bei einer Fehlfunktion einer dieser dennoch ein Öffnen des mechanischen Schalters möglich, weswegen eine Sicherheit erhöht ist. Mit anderen Worten ist eine Redundanz gebildet, wobei zum Beispiel auch beim Ausfall des Steuerkreises dennoch ein sicheres Auftrennen ermöglicht ist.

Zusammenfassend ist es mittels der beiden Antriebseinheiten ermöglicht, eine vergleichsweise große Kraft auf den mechanischen Schalter auszuüben, sodass dieser vergleichsweise stark beschleunigt wird. Infolgedessen ist auch eine Schaltzeit des mechanischen Schalters beschleunigt, geeigneterweise im Fehlerfall. Jedoch ist es auch möglich, den mechanischen Schalter lediglich mit einer der Antriebseinheiten zu betätigen, wie insbesondere der ersten Antriebseinheit oder der zweiten Antriebseinheit, sodass eine elektrische und auch mechanische Belastung sowie ein Energiebedarf verringert ist. Infolgedessen ist ein Einsatzbereich des Schutzschalters vergrößert, und dieser wird zum Beispiel auch beim Normalbetrieb zum Unterbrechen des elektrischen Stroms herangezogen, wobei lediglich eine der Antriebseinheiten bestromt wird. Im Fehlerfall hingegen werden beide Antriebseinheiten zum Betätigen des Schalters herangezogen. Somit ist eine Anzahl an benötigten Bauteilen verringert. Dabei ist aufgrund des mechanischen Schalters ein elektrischer Widerstand des Schutzschalters vergleichsweise gering, sodass bei Betrieb des Schutzschalters keine oder lediglich vergleichsweise geringe elektrische Verluste auftreten. Auch ist mittels des Schutzschalters ein galvanisches Trennen ermöglicht, weswegen eine Sicherheit erhöht ist. Mittels des Widerstandselements ist dabei sichergestellt, dass die zweite Antriebseinheit nicht kontinuierlich bestromt wird, weswegen ebenfalls elektrische Verluste verringert sind.

Der Schutzschalter ist vorzugsweise zur Gleichstromunterbrechung ausgestaltet und zum Beispiel lediglich unidirektional oder besonders bevorzugt bidirektional. Geeigneterweise weist der Schutzschalter einen weiteren Hauptstrompfad auf, wobei zwischen dem Hauptstrompfad und dem weiteren Hauptstrompfad bei Betrieb eine elektrische Spannung anliegt. Zum Beispiel ist der weitere Hauptstrompfad elektrisch mit Masse verbunden, oder der Schutzschalter weist einen weiteren mechanischen Schalter auf, der in den weiteren Hauptstrompfad eingebracht ist, und der mittels eines entsprechenden Antriebs betätigt ist. Somit ist eine Sicherheit weiter erhöht. Besonders bevorzugt ist eine maximal mittels des Schutzschalters schaltbare elektrische Spannung größer als 100 V, 200 V oder 500 V. Zum Beispiel ist die maximal mittels des Schutzschalters schaltbare elektrische Spannung kleiner als 3500 V oder 3000 V. Hierfür ist der Schutzschalter jeweils geeignet, insbesondere vorgesehen und eingerichtet. Zum Beispiel ist der Schutzschalter zum Schalten einer elektrischen Spannung von 1000 V vorgesehen, und/oder einem Schalten eines elektrischen Stroms von mehreren 100 A, also beispielsweise 200 A, 400 A, 600 A oder 800 A. Hierfür ist der Schutzschalter zweckmäßigerweise jeweils geeignet, vorzugsweise eingerichtet.

Besonders bevorzugt wird der Schutzschalter in einem Kraftfahrzeug verwendet, insbesondere in einem Bordnetz, mittels dessen ein elektrischer Gleichstrom geführt ist. Besonders bevorzugt ist der Schutzschalter ein Bestandteil eines Hochvoltbordnetz des Kraftfahrzeugs und dient insbesondere der Absicherung einer Hochvoltbatterie und/oder eines Elektromotors eines Kraftfahrzeugs, mittels dessen insbesondere ein Antrieb erfolgt. Das Kraftfahrzeug ist beispielsweise ein Schiff, Bott oder Luftfahrzeug. Besonders bevorzugt jedoch ist das Kraftfahrzeug landgebunden und zum Beispiel schienengeführt. Das Kraftfahrzeug ist in diesem Fall beispielsweise ein Triebwagen, eine Lokomotive, ein Zug oder eine Straßenbahn. Alternativ ist das Kraftfahrzeug unabhängig von Schienen oder dergleichen bewegbar. Zweckmäßigerweise ist das Kraftfahrzeug ein Personenkraftwagen (Pkw) oder besonders bevorzugt ein Nutzkraftwagen, wie zum Beispiel ein Bus oder ein Lastkraftwagen (Lkw). Alternativ ist der Schutzschalter für den industriellen Bereich vorgesehen und beispielsweise im Montagezustand ein Bestandteil einer Industrieanlage.

Geeigneterweise weist der Schutzschalter einen Handschalter auf, der in Wirkverbindung mit dem mechanischen Schalter ist, vorzugsweise mit der Kontaktbrücke. Mittels des Handschalters ist es geeigneterweise möglich, den mechanischen Schalter in einen bestimmten Zustand zu verbringen, beispielsweise in den geschlossenen Zustand oder den geöffneten Zustand. Zum Beispiel ist ein Verbringen in den jeweils anderen Zustand aufgrund einer zwischen dem mechanischen Schalter und dem Handschalter angeordneten Mechanik nicht möglich. Besonders bevorzugt jedoch ist es möglich, mittels des Handschalters den mechanischen Schalter sowohl in den geschlossenen als auch in den geöffneten Zustand zu überführen. Zusammenfassend ist der Schutzschalter somit auch handbetätigbar, und es ist somit insbesondere möglich, den Schutzschalter zurückzusetzen. Alternativ oder in Kombination ist es zum Beispiel mittels des Schutzschalters möglich, einen Betrieb manuell zu unterbinden, beispielsweise des etwaigen Kraftfahrzeugs.

Geeigneterweise umfasst der Schutzschalter eine weitere Mechanik, die auf den mechanischen Schalter wirkt, und mittels dessen der mechanische Schalter zurückgesetzt werden kann. Insbesondere ist hierfür der Antrieb oder ein weiterer Antrieb vorgesehen. Somit ist nach dem Auslösen des Schutzschalters auch ein Zurücksetzen ermöglicht, sodass dieser erneut stromführend ist. Hierfür ist zweckmäßigerweise keine manuelle Tätigkeit erforderlich.

Beispielsweise ist die Kontaktbrücke mit einer Kraft beaufschlagt, beispielsweise einer Federkraft, und diese wird zum Beispiel mittels einer Verklinkung in einer bestimmten Position gehalten. Hierbei wirkt der Antrieb insbesondere auf die Verklinkung, sodass bei Bestromung des Antriebs die Verklinkung gelöst wird. Infolgedessen wird die Kontaktbrücke aufgrund der weiteren wirkenden Kraft bewegt. Infolgedessen ist es nicht erforderlich, mittels des Antriebs eine vergleichsweise große Kraft auszuüben, wobei dennoch ein vergleichsweise schnelles Betätigen des mechanischen Schalters erfolgt.

Besonders bevorzugt jedoch ist der Antrieb mechanisch mit der Kontaktbrücke gekoppelt. Mit anderen Worten wird bei Betrieb die Kontaktbrücke aufgrund der mittels des Antriebs ausgeübten Kraft bewegt. Infolgedessen ist eine Anzahl an benötigten Bauteilen reduziert. In einer Weiterbildung ist die Kontaktbrücke verklinkt, und der Antrieb wirkt sowohl auf die Verklinkung als auch auf die Kontaktbrücke. Zweckmäßigerweise ist dabei ein weiteres Bauteil vorhanden, mittels dessen ebenfalls eine Kraft auf die Kontaktbrücke ausgeübt wird, wie beispielsweise die Feder. Auf diese Weise erfolgt das Betätigen des mechanischen Schalters, also das Verstellen der Kontaktbrücke, sowohl mittels des Antriebs als auch mittels des weiteren Bauteils, wie der Feder, sodass eine Schaltgeschwindigkeit weiter erhöht ist. Dabei ist die mittels des Antriebs aufzubringende Kraft verringert, sodass dieser vergleichsweise kleinbauend ausgestaltet werden kann. Dabei wird jedoch auch die mittels des Antriebs aufgebrachte Kraft zum Verbringen der Kontaktbrücke herangezogen, sodass die bereitgestellte Kraft vergleichsweise effizient genutzt wird. In einer Alternative oder Weiterbildung wirkt eine der Antriebseinheiten auf die etwaige Verklinkung, und die andere Antriebseinheit wirkt auf die Kontaktbrücke und ist somit mit dieser gekoppelt.

Beispielsweise ist die Kontaktbrücke starr an einer mittels des Antriebs angetriebenen transversal gelagerten Stange befestigt. Bevorzugt jedoch ist die Kontaktbrücke an der Stange ebenfalls transversal gelagert, wobei zweckmäßigerweise zwei Endanschläge für eine Begrenzung der Bewegung der Kontaktbrücke bezüglich der Stange vorhanden sind. Somit ist es möglich, die Kontaktbrücke zwischen diesen beiden Endanschlägen zu bewegen, sodass zum Beispiel bei einem etwaigen Abbrand der Kontakte oder hohen Fertigungstoleranzen dennoch eine sichere, vollflächige mechanische Anlage des Bewegkontakt an dem Festkontakt Takts im geschlossenen Zustand des Schutzschalters vorliegt. Insbesondere ist hierbei einer der Endanschläge derart ausgestaltet, dass dennoch mittels des Antriebs die Kontaktbrücke aus dem geschlossenen Zustand bewegt werden kann. Mit anderen Worten ist der Abstand der Endanschläge zueinander vorzugsweise geringer als der Stellweg des Antriebs. Aufgrund des verbleibenden Endanschlags ist dabei auch ein Bewegen der Kontaktbrücke unabhängig von dem aktuellen Zustand des Antriebs möglich, sodass bei einem vergleichsweise hohen fließenden elektrischen Strom aufgrund der sogenannten Holmschen Engekraft ein ebenfalls Abheben der Kontaktbrücke erfolgt, sodass der Bewegkontakt von dem Festkontakt getrennt wird. Dies erfolgt beispielsweise bereits bevor die Kontaktbrücke mittels des Antriebs bewegt wird. Mit anderen Worten wirken auf die Kontaktbrücke in diesem Fall sowohl die mittels des Antriebs aufgebrachte Kraft als auch die aufgrund der vorhandenen magnetischen Felder vorhandenen Kräfte, sodass eine Schaltgeschwindigkeit erhöht ist. Vorzugsweise ist zwischen einem der Endanschläge und der Kontaktbrücke eine Feder angeordnet, mittels derer die Kontaktbrücke in eine bestimmte Position bewegt wird, wenn keine weiteren Kräfte wirken.

Beispielsweise ist die zweite Antriebseinheit direkt mit dem Hauptstrompfad verbunden. Besonders bevorzugt jedoch ist die zweite Antriebsseite über einen Gleichrichter mit dem Hauptstrompfad verbunden. Auf diese Weise ist es möglich, den Schutzschalter bidirektional zu betreiben, wobei eine Konstruktion der zweiten Antriebseinheit vereinfacht ist. Vorzugsweise ist dabei der Gleichrichter passiv ausgestaltet und weist insbesondere mehrere Dioden auf. Zweckmäßigerweise ist der Gleichrichter als Brückengleichrichter, insbesondere als B4-Gleichrichter, ausgestaltet. Auf diese Weise sind einerseits Herstellungskosten vergleichsweise gering. Andererseits ist für den Betrieb des Gleichrichters keine Ansteuerung oder dergleichen erforderlich, weswegen eine Robustheit erhöht ist.

Insbesondere dient dabei der Gleichrichter auch der Einstellung, ab wann die zweite Antriebseinheit stromführend ist. Zweckmäßigerweise ist diese lediglich dann Strom führend, wenn die über dem Widerstandselement abfallende elektrische Spannung größer ist als die über die Reihenschaltung aus dem Gleichrichter und der zweiten Antriebseinheit abfallende elektrische Spannung ist. Somit sind die Anforderungen an das Widerstandselement abgesenkt, und es ist möglich ein Widerstandselement mit vergleichsweise hohen Fertigungstoleranzen heranzuziehen, wobei mittels der für den Betrieb des Gleichrichters erforderlichen elektrischen Spannung sichergestellt ist, dass lediglich im Fehlerfall die Kommutierung des elektrischen Stroms von dem Widerstandselement auf die zweite Antriebseinheit erfolgt. Somit ist eine Betriebssicherheit weiter erhöht, wobei Herstellungskosten reduziert sind.

Alternativ oder besonders bevorzugt Kombination hierzu ist zwischen die zweite Antriebseinheit und den Hauptstrompfad eine Zener-Diode geschaltet. Sofern der Gleichrichter vorhanden ist, befindet sich die Zener-Diode zweckmäßigerweise zwischen dem Gleichrichter und der zweiten Antriebseinheit. Aufgrund der Zener-Diode erfolgt das Stromführen mittels der zweiten Antriebseinheit lediglich erst, wenn die über das Widerstandselement abfallende elektrische Spannung zumindest die Durchbruchsspannung der Zener-Diode erreicht, gegebenenfalls in Verbindung mit der aufgrund des Gleichrichters erforderlichen elektrischen Spannung. Somit ist es mittels der Zener-Dioden möglich, einzustellen, ab welcher Schwelle des mittels des Hauptstrompfads geführten elektrischen Stroms die zweite Antriebseinheit betätigt wird. Infolgedessen ist lediglich das Anpassen der Zener-Diode auf den aktuellen Anwendungsfall erforderlich, wohingegen anderweitig Gleichteile verwendet werden können. Somit sind Herstellungskosten reduziert.

Alternativ oder in Kombination zu der Zener-Diode ist ein Heißleiter elektrisch zwischen die zweite Antriebseinheit und den Hauptstrompfad geschaltet, wobei der Heißleiter zum Beispiel thermisch mit dem Widerstandselement oder sonstigen Bestandteil des Hauptstrompfads verbunden ist. Wenn somit aufgrund eines vergleichsweise großen, mittels des Hauptstrompfads geführten elektrischen Stroms eine Erwärmung des Heißleiters (NTC) erfolgt, sinkt dessen elektrischer Widerstand, sodass die zweite Antriebseinheit stromführend und folglich der mechanische Schalter geöffnet wird.

In einer weiteren Alternative ist zwischen die zweite Antriebseinheit und den Hauptstrompfad ein zweiter Schalter geschaltet. Der zweite Schalter wird herbei insbesondere mittels einer zweiten Steuereinheit gesteuert, wobei die zweite Steuereinheit insbesondere anhand der über das Widerstandselement abfallende elektrische Spannung bestromt wird. Alternativ hierzu wird die zweite Steuereinheit beispielsweise mittels des Steuerkreises oder stets über den Hauptstrompfad bestromt. Der zweite Schalter wird dabei insbesondere geschlossen, wenn ein Fehlerfall vorliegt, was zum Beispiel mittels der zweiten Steuereinheit erfasst wird. Hierfür werden insbesondere bestimmte Sensoren ausgewertet. Zum Beispiel wird der zweite Schalter geschlossen, wenn die erste Antriebseinheit bestromt wird, sodass in diesem Fall ebenfalls auch die zweite Antriebseinheit bestromt wird. Anderenfalls bleibt zum Beispiel der zweite Schalter stets geöffnet.

Besonders bevorzugt ist ein zweiter Stromsensor vorhanden, der zum Beispiel zwischen die zweite Antriebseinheit und den Hauptstrompfad eingebracht ist. Mit anderen Worten wird mittels des zweiten Stromsensors der mittels der zweite Antriebseinheit geführte elektrische Strom gemessen. Der zweite Stromsensor ist hierbei beispielsweise ein Shunt oder umfasst diesen. Geeigneterweise wird dabei der zweite Schalter in Abhängigkeit des mittels des zweiten Stromsensors gemessenen elektrischen Stroms betätigt.

Geeigneterweise wird der zweite Schalter geöffnet, wenn der mittels des zweite Stromsensors erfasste elektrische Strom einen weiteren Grenzwert überschreitet. Somit wird mittels Betätigung des zweiten Schalters sichergestellt, dass eine Beschädigung der zweiten Antriebseinheit vermieden ist, auch bei einem vergleichsweise umfangreichen Fehlerfall. In diesem Fall wird somit die zweite Antriebseinheit stillgesetzt. Jedoch ist auch weiterhin ein Bestromen der ersten Antriebseinheit möglich, sodass der mechanische Schalter mittels dieser geöffnet wird. Folglich erfolgt dennoch mittels des Schutzschalters ein Unterbrechen des elektrischen Stromflusses. Besonders bevorzugt wird die zweite Steuereinheit mittels des zwischen dem Hauptstrompfad und der zweiten Antriebseinheit fließenden elektrischen Stroms bestromt. Somit wird die zweite Steuereinheit lediglich dann bestromt, wenn auch die zweite Antriebseinheit bestromt wird. Somit ist eine für den Betrieb des Schutzschalters erforderliche Energiemenge reduziert. Dabei ist mittels der zweiten Steuereinheit dennoch das Absichern der zweiten Antriebseinheit möglich.

Der Schutzschalter umfasst vorzugsweise eine Steuereinheit, mittels derer die erste Antriebseinheit bestromt ist. Somit wird auch die Steuereinheit mittels des Steuerkreises gespeist und folglich über diesen bestromt. Hierbei ist die Steuereinheit insbesondere derart ausgestaltet, dass mittels dieser der Fehlerfall erkannt wird, und dass im Fehlerfall die erste Antriebseinheit derart bestromt oder zumindest betätigt wird, dass der Schalter geöffnet wird, also der Bewegkontakt von dem Festkontakt beabstandet wird. Hierfür ist die Steuereinheit insbesondere geeignet sowie vorgesehen und eingerichtet. Alternativ oder in Kombination hierzu ist die Steuereinheit signaltechnisch mit weiteren Bestandteilen im Montagezustand verbunden und weist zweckmäßigerweise einen entsprechenden Anschluss hierfür auf. Zum Beispiel weist die Steuereinheit einen Anschluss an ein etwaiges Bussystem des etwaigen Kraftfahrzeugs auf. Geeigneterweise dient der Schutzschalter der Bereitstellung von funktionaler Sicherheit, und die Steuereinheit ist entsprechend ausgestaltet. Insbesondere ist es hierbei möglich, verschiedene Sicherheitsfunktionen mittels des Schutzschalters zu realisieren, und die Steuereinheit ist zum Beispiel entsprechend zertifiziert oder in dieser sind zumindest die unterschiedlichen Ansteuerarten für die erste Antriebseinheit zur Bereitstellung der funktionalen Sicherheit hinterlegt. In einer Weiterbildung wird mittels der Steuereinheit insbesondere der Strom für die Bestromung der ersten Antriebseinheit gesteuert und/oder geregelt, wobei beispielsweise eine Pulsweitenmodulation herangezogen wird. Auf diese Weise ist es möglich, eine Schaltzeit der ersten Antriebseinheit einzustellen.

Zum Beispiel umfasst der Schutzschalter dabei auch die zweite Steuereinheit, mittels derer insbesondere auch die zweite Antriebseinheit gesteuert oder zumindest überwacht ist. Die zweite Steuereinheit ist beispielsweise mittels des Steuerkreises oder über den Hauptstrompfad gespeist. Alternativ hierzu wird die zweite Antriebseinheit mittels der Steuereinheit gesteuert oder überwacht. Besonders bevorzugt jedoch ist die zweite Antriebseinheit nicht gesteuert/geregelt, weswegen eine Robustheit erhöht ist.

Die Steuereinheit weist beispielsweise einen Auslöser auf, der insbesondere nach Art eines Schalters ausgestaltet ist. Der Auslöser ist beispielsweise in direkter Nähe oder in mechanischem Kontakt mit dem Hauptstrompfad angeordnet oder beispielsweise ein Bestandteil des Hauptstrompfads. Insbesondere wird mittels des Auslösers der mittels des Hauptstrompfads geführte elektrische Strom, und/oder die daran anliegende elektrische Spannung erfasst, und in Abhängigkeit hiervon der Antrieb, insbesondere die erste Antriebseinheit, bestromt. Der Auslöser ist zum Beispiel magnetisch ausgestaltet und beispielsweise ein Reed-Relais oder umfasst zumindest dieses. Alternativ hierzu ist der Auslöser hydraulisch ausgestaltet oder besonders bevorzugt ein thermischer Auslöser, wie zum Beispiel eine Bimetallschnappscheibe, ein sonstiges Bimetallelement, ein Kaltleiter (PTC) oder ein Heißleiter (NTC).

Beispielsweise ist die Steuereinheit mittels des Auslösers gebildet, und der Auslöser ist zweckmäßigerweise elektrisch in Reihe mit der ersten Antriebseinheit geschaltet. Alternativ hierzu ist der jeweilige Auslöser lediglich nach Art eines Signalgebers ausgestaltet, und signaltechnisch mit weiteren Komponenten der Steuereinheit verbunden. Die Steuereinheit selbst ist dabei beispielsweise mittels analoger Bauteile realisiert, oder diese weist zum Beispiel einen Mikrocontroller auf.

Besonders bevorzugt ist die Steuereinheit signaltechnisch mit einem Stromsensor des Hauptstrompfads verbunden. Der Stromsensor ist dabei geeignet, insbesondere vorgesehen und eingerichtet, den mittels des Hauptstrompfads geführten elektrischen Strom zu messen. Die Steuereinheit ist dabei insbesondere mittels eines Mikrocontrollers realisiert, oder umfasst zumindest diesen, oder weist mehrere diskrete, analoge Bauteile auf. Beispielsweise umfasst der Stromsensor eine elektrische Spule oder zum Beispiel einen Shunt, der in den Hauptstrompfad eingebracht ist.

In Abhängigkeit des mittels des Stromsensors erfassten Werts für den elektrischen Strom wird zweckmäßigerweise mittels der Steuereinheit die erste Antriebseinheit bestromt, sodass die Kontaktbrücke und folglich der mechanische Schalter betätigt wird. Aufgrund einer derartigen Ausgestaltung ist insbesondere eine Flexibilität erhöht, und es ist insbesondere möglich, den Schutzschalter bei unterschiedlichen Anwendungsbereichen einzusetzen. Infolgedessen ist auch das Schalten des mechanischen Schalters in einem Fehlerfall möglich, bei dem mittels der zweiten Antriebseinheit keine Beeinflussung des Schaltzustands des Schalters erfolgt. Infolgedessen ist ein Einsatzbereich des Schutzschalters vergrößert.

Besonders bevorzugt umfasst der Schutzschalter alternativ oder in Kombination zumindest einen oder mehrere elektrische Spannungssensoren, mittels derer beispielsweise die über den mechanischen Schalter abfallende elektrische Spannung, die über den etwaigen Stromsensor abfallende elektrische Spannung, die über das Widerstandselement abfallende elektrische Spannung, die über die Reihenschaltung aus der mechanische Schalter und dem Widerstandselement, gegebenenfalls in Verbindung mit dem etwaigen Stromsensor abfallende elektrische Spannung, die über die erste und/oder Antriebseinheit abfallende elektrische Spannung und/oder die zwischen dem Hauptstrompfad und dem etwaigen weiteren Hauptstrompfad anliegende elektrische Spannung gemessen werden kann. Vorzugsweise erfolgt dabei mittels der Steuereinheit eine Bestromung der ersten bzw. zweiten Antriebseinheit in Abhängigkeit der jeweils erfassten Werte. Geeigneterweise erfolgt mittels der Steuereinheit eine Auswertung der zeitlichen Änderung des elektrischen Stroms bzw. der elektrischen Spannung sowie die Betätigung des Antriebs, insbesondere der ersten Antriebseinheit, in Abhängigkeit hiervon. Folglich ist auch ein Erfassen unterschiedlichster Fehlerfälle ermöglicht, weswegen eine Sicherheit erhöht ist.

Besonders bevorzugt umfasst die Steuereinheit einen Energiespeicher zur Bestromung der ersten Antriebseinheit. Insbesondere wird bei Betrieb der Energiespeicher mittels des Steuerkreises geladen. Somit ist auch bei einem Ausfall der Bestromung über den Steuerkreis ein Betätigen des Antriebs, insbesondere der ersten Antriebseinheit, ermöglicht, weswegen stets eine Sicherheit gewährleistet ist. Besonders bevorzugt ist der Energiespeicher als Kondensator ausgestaltet, der beispielsweise elektrisch parallel zu der ersten Antriebseinheit oder weiteren Bestandteilen der Steuereinheit, wie dem etwaigen Mikrocontroller, geschaltet ist. Mittels des Kondensators werden somit auch etwaige Spannungsschwankungen in dem Steuerkreis ausgeglichen, weswegen die erste Antriebseinheit bzw. die weiteren Bestandteile der Steuereinheit geschützt und ein sicherer Betrieb ermöglicht ist. Mit anderen Worten erfolgt mittels des Kondensators ein Dämpfen kurzzeitiger Stromsprünge.

Zum Beispiel umfasst die Steuereinheit eine Ladungspumpe, einen Spannungsvervielfacher oder eine sonstige Komponente, mittels derer es möglich ist, den Energiespeicher auf eine höhere elektrische Spannung zu laden, als mittels des Steuerkreises bereitgestellt ist. Auf diese Weise ist mittels des Energiespeichers eine vergleichsweise große Menge elektrische Energie bei Betrieb gespeichert, sodass bei Ausfall des Steuerkreises auch weitere Komponenten der Steuereinheit bestromt werden können, oder für den Betrieb des Antriebs, insbesondere der ersten Antriebseinheit, eine vergrößerte Menge an elektrischer Energie bereitgestellt ist, sodass sicher ein Betätigen des mechanischen Schalters erfolgt.

Zum Beispiel arbeiten die beiden Antriebseinheiten nach dem gleichen Prinzip oder unterschiedlichen Prinzipien (Wirkweisen/Wirkprinzipien). So umfasst zumindest eine der Antriebseinheiten beispielsweise einen Wirbelstromantrieb, eine Wirbelstromspule, einen Reluktanzantrieb, eine Reluktanzspule, einen Piezo-Aktor, oder die jeweilige Antriebseinheit ist mittels einer Kombination hieraus gebildet. Vorzugsweise sind die beiden Antriebseinheiten baugleich oder zumindest nach den gleichen Wirkprinzipien aufgebaut, was eine Konstruktion vereinfacht. Auch ist es möglich, zumindest teilweise Gleichteile zu verwenden. Alternativ hierzu unterscheiden sich die Konstruktion und/oder Wirkweisen der beiden Antriebseinheiten, sodass eine Robustheit und Sicherheit erhöht ist. Besonders bevorzugt weist der Antrieb einen "Moving Magnet Aktuator" auf, der im Weiteren insbesondere auch lediglich als Aktuator bezeichnet ist, und mittels dessen die beiden Antriebseinheiten gebildet sind.

Der "Moving Magnet Aktuator" ("Moving Magnet Actuator") weist einen Permanentmagneten auf, der beweglich gelagert ist. Zum Beispiel ist der Permanentmagnet drehbeweglich gelagert oder besonders bevorzugt linear beweglich. Der Permanentmagnet ist an der Kontaktbrücke angebunden oder zumindest in Wirkverbindung mit dieser, sodass bei einer Bewegung des Permanentmagneten die Kontaktbrücke vorzugsweise bewegt wird. Zudem weist jede Antriebseinheit eine oder mehrere elektrische Spulen auf, die bei Betätigung der jeweiligen Antriebseinheit bestromt werden, sodass zwischen diesen und dem Permanentmagneten eine magnetische Wechselwirkung erfolgt. Die elektrischen Spulen sind dabei ortsfest gehalten.

Da die elektrische(n) Spule(n) stationär gehalten ist/sind, ist eine Konstruktion vereinfacht, und es sind, mit Ausnahme der für die Lagerung erforderlichen Komponenten keine weiteren beweglich Bauteile oder elektrischen Verbindungen zwischen den beweglichen Bauteilen, nämlich dem Permanentmagneten, und den stationären Bauteilen des "Moving Magnet Aktuators" erforderlich. Somit ist auch eine Reibung verringert. Da die Anzahl der beweglichen Bestandteile des "Moving Magnet Aktuators", insbesondere lediglich der Permanentmagnet, vergleichsweise gering ist, und diese insbesondere ein vergleichsweise geringes Gewicht aufweisen, ist eine Dynamik des Aktuators vergleichsweise hoch. Somit ist eine Trägheit beim Betätigen der Kontaktbrücke und somit beim Betätigen des Schalters verringert. Infolgedessen ist mittels des Schutzschalters ein vergleichsweise schnelles Schalten ermöglicht, weswegen eine Sicherheit erhöht ist.

Beispielsweise ist der Aktuator rotatorisch ausgestaltet oder besonders bevorzugt linear. **In** diesem Fall weist jede Antriebseinheit zwei konzentrisch auf einer (gemeinsamen) Achse angeordnete elektrische Spulen auf, die entlang der Achse zueinander beabstandet sind, und zwischen denen der Permanentmagnet angeordnet ist, dessen beiden Polen sich bezüglich der Achse gegenüberliegen, und der beweglich entlang der Achse gelagert ist. Die beiden elektrischen Spulen jeder Antriebseinheit werden hierbei insbesondere bei dem jeweiligen Betrieb gleichzeitig bestromt, und sind beispielsweise elektrisch in Reihe oder besonders bevorzugt elektrisch parallel zueinander geschaltet. Die Verschaltung der elektrischen Spulen ist hierbei derart, dass, wenn diese bestromt werden, mittels der elektrischen Spulen ein Magnetfeld erstellt wird, das mit dem Magnetfeld des Permanentmagneten derart wechselwirkt, dass dieser entlang der Achse zu einer der elektrischen Spulen der jeweiligen Antriebseinheit gezogen und von der anderen elektrischen Spule der gleichen Antriebseinheit weggedrückt wird. Folglich wirkt eine vergleichsweise große Kraft auf den Permanentmagneten, weswegen eine Dynamik weiter erhöht ist.

Insbesondere ist jede der elektrischen Spulen der einen der Antriebseinheiten von jeweils einer der elektrischen Spulen der anderen Antriebseinheit umgeben, und diese sind insbesondere jeweils zueinander konzentrisch angeordnet. Somit ist ein vergleichsweise kompakter "Moving Magnet Aktuator" bereitgestellt. Besonders bevorzugt weisen die elektrischen Spulen der zweiten Antriebseinheit eine vergleichsweise geringe Windungszahl auf, die zweckmäßigerweise geringer als 50, 30 oder 20 ist. Somit ist es zudem möglich, einen vergleichsweise großen Querschnitt für den elektrischen Leiter der elektrischen Spulen der zweiten Antriebseinheit zu verwenden, sodass eine Stromtragfähigkeit erhöht ist. Infolgedessen ist auch bei einem vergleichsweise großen Überstrom, der mittels des Hauptstrompfads und somit auch mittels der elektrischen Spulen der zweiten Antriebseinheit geführt wird, eine Beschädigung dieser ausgeschlossen. Besonders bevorzugt umgibt hierbei jeweils eine der elektrischen Spulen der zweiten Antriebseinheit eine der elektrischen Spulen der ersten Antriebseinheit.

Besonders bevorzugt weist der "Moving Magnet Aktuator" ein (magnetisches) Kurzschlussblech oder dergleichen auf, mittels derer der Permanentmagnet in einer bestimmten Stellung gehalten wird, wenn keine Bestromung der elektrischen Spule(n) erfolgt. Zum Beispiel liegt in diesem Fall der Permanentmagnet an dem Kurzschlussblech an oder ist besonders bevorzugt zu diesem stets beabstandet. Das Kurzschlussblech ist zweckmäßigerweise aus einem ferromagnetischen Material erstellt, wie zum Beispiel Eisen, weswegen Herstellungskosten reduziert sind. Aufgrund des Kurzschlussblechs wird der Permanentmagnet in einer Stellung stabilisiert, insbesondere wenn der Schalter geschlossen ist. Folglich ist der mechanische Schalter zumindest monostabil oder bistabil ausgestaltet.

In einer weiteren Alternative ist lediglich eine der Antriebseinheiten mittels des Aktuators gebildet. Die andere Antriebseinheit ist zum Beispiel hiervon separat und insbesondere als Wirbelstromantrieb oder Reluktanzantrieb ausgestaltet.

Insbesondere ist das Widerstandselement steuerbar ausgestaltet, sodass die mittels des Widerstandselements realisierte (ohmscher) Widerstand eingestellt werden kann. Das Widerstandselement umfasst einen zusätzlichen Schalter und ist zum Beispiel mittels dessen gebildet. Der zusätzliche Schalter ist beispielsweise ein mechanischer Schalter, wie ein Relais, oder besonders bevorzugt ein Halbleiterschalter. Hierbei sind zweckmäßigerweise zwei derartige zusätzliche Schalter vorhanden, die zum Beispiel antiparallel oder -seriell zueinander geschaltet sind, sodass der Schutzschalter bidirektional ausgestaltet ist. Der jeweilige Halbleiterschalter ist beispielsweise ein Feldeffekttransistor, wie ein MOSFET, oder ein Bipolartransistor, wie ein IGBT, IGCT, ein Thyristor oder ein GTO.

Der zusätzliche Schalter bzw. die Verschaltung aus den beiden zusätzlichen Schaltern ist mittels einer zusätzlichen Steuereinheit angesteuert. Mittels der zusätzlichen Steuereinheit wird insbesondere der Fehlerfall erfasst und in Abhängigkeit hiervon der zusätzliche Schalter bzw. die zusätzlichen Schalter betätigt. Infolgedessen steigt im Wesentlichen schlagartig der mittels des Widerstandselements bereitgestellte elektrische Widerstand, weswegen der elektrische Strom von dem Widerstandselement auf die zweite Antriebseinheit kommutiert, sodass der mechanische Schalter geöffnet wird. Die zusätzliche Steuereinheit ist insbesondere mittels des Steuerkreises bestromt, sodass diese unabhängig von dem Fehlerfall in dem Hauptstrompfad betrieben ist. Alternativ hierzu wird die zusätzliche Steuereinheit zum Beispiel anhand der über den zusätzlichen Schalter bzw. die Verschaltung der zusätzlichen Schalter anfallenden elektrischen Spannung bestromt, was insbesondere lediglich bei einem Fehlerfall erfolgt.

Zweckmäßigerweise ist parallel zu dem Widerstandselement und somit auch zu dem zusätzlichen Schalter bzw. den zusätzlichen Schalter ein Überspannungsschutz geschaltet, der beispielsweise einen Varistor und/oder eine Verschaltung aus Zener-Dioden umfasst. Zum Beispiel ist der Überspannungsschutz mittels sogenannten "active clampings" der als Halbleiterschalter ausgestaltet sind zusätzlichen Schalter realisiert. Mittels des Überspannungsschutzes erfolgt jeweils eine Absicherung des/der zusätzlichen Schalter(s), sodass eine Zerstörung hiervon aufgrund einer vergleichsweise hohen anliegenden elektrischen Spannung, insbesondere aufgrund des Betätigens des mechanischen Schalters, vermieden ist. Auch wird auf diese Weise mittels des Überspannungsschutzes die an der zweiten Antriebseinheit sowie die an dem etwaigen Gleichrichter anliegende elektrische Spannung begrenzt, weswegen auch deren Beschädigung vermieden ist. Aufgrund der Verwendung des zusätzlichen Schalters als Widerstandselement ist ein geregeltes Einstellen der Kommutierung des elektrischen Stroms von dem Widerstandselement auf den zweiten Antriebsstrang ermöglicht, sodass auch bei einer Vielzahl unterschiedlicher Fehlerfälle ein Betrieb der zweiten Antriebseinheit ermöglicht ist.

Besonders bevorzugt umfasst der Schutzschalter einen zweiten zusätzlichen Schalter, der insbesondere parallel zu dem zusätzlichen Schalter geschaltet ist. Geeigneterweise sind hierbei der zusätzliche Schalter und der zweite zusätzliche Schalter als Halbleiterschalter ausgestaltet, und es sind vorzugsweise zwei zusätzliche Schalter sowie zwei zweite zusätzliche Schalter vorhanden, die jeweils zueinander antiparallel oder antiseriell geschaltet sind, sodass ein bidirektionaler Betrieb des Schutzschalters ermöglicht ist. Vorzugsweise weisen dabei der bzw. die zusätzlichen Schalter einen vergleichsweise niedrigen Innenwiderstand auf, sodass im Normalbetrieb mittels dieser der von dem Hauptstrompfad getragene elektrische Strom geführt wird. Zum Beispiel weisen die zusätzlichen Schalter ein vergleichsweise schlechtes Schaltverhalten auf, weswegen hierfür vergleichsweise kostengünstigen Halbleiterschalter herangezogen werden können.

Die zweiten zusätzlichen Schalter weisen zum Beispiel ein vergleichsweise gutes Schaltverhalten auf und sind insbesondere zum Schalten von vergleichsweise hohen elektrischen Spannungen und/oder hohen elektrischen Strömen geeignet. Zum Beispiel weisen die zweiten zusätzlichen Schalter einen vergleichsweise hohen Innenwiderstand auf, sodass auch hierfür vergleichsweise kostengünstige Halbleiterschalter verwendet werden können. Somit sind sowohl die zusätzlichen Schalter als auch die zweiten zusätzlichen Schalter vergleichsweise kostengünstig, jedoch unterscheiden sich diese zueinander.

Aufgrund des vergleichsweise hohen Innenwiderstands der zweiten zusätzlichen Schalter wird mittels dieser im Normalbetrieb nicht der elektrische Strom getragen. Der elektrische Strom wird vielmehr mittels der zusätzlichen Schalter getragen, weswegen elektrische Verluste vergleichsweise gering sind. Im Fehlerfall werden zweckmäßigerweise zunächst die zusätzlichen Schalter mit dem vergleichsweise niedrigen Innenwiderstand geöffnet, was vorzugsweise mittels der zusätzlichen Steuereinheit erfolgt, die hierfür geeignet, insbesondere vorgesehen und eingerichtet. Infolgedessen kommutiert der elektrische Strom zunächst auf die zweiten zusätzlichen Schalter, wobei die elektrischen Verluste ansteigen. Nachfolgend werden die zweiten zusätzlichen Schalter betätigt, die auch den vergleichsweise großen elektrischen Stromfluss sowie die hohe elektrische Spannung ohne Beschädigung schalten können. Infolgedessen kommutiert der elektrische Strom auf die zweite Antriebseinheit, die somit betätigt wird.

Zum Beispiel ist den zweiten zusätzlichen Schaltern eine zweite zusätzliche Steuereinheit zugeordnet, oder mittels der zusätzlichen Steuereinheit erfolgt ebenfalls ein Ansteuern der zweiten zusätzlichen Schalter. Sofern die zweite zusätzliche Steuereinheit vorhanden ist, ist diese insbesondere anhand der über die zweiten zusätzlichen Schalter abfallenden elektrischen Spannung bestromt. Besonders bevorzugt ist zu dem bzw. den zweiten zusätzlichen Schaltern ein Überspannungsschutz parallel geschaltet, sodass eine elektrische Überspannung an den zweiten zusätzlichen Schaltern vermieden wird. Alternativ hierzu ist lediglich ein einziger entsprechender Überspannungsschutz vorhanden, der den zusätzlichen Schaltern sowie den zweiten zusätzlichen Schaltern zugeordnet ist.

In einer Alternative hierzu wird als Widerstandselement zum Beispiel lediglich ein Varistor, ein ohmscher Widerstand, eine Sicherung, ein regelbarer Widerstand, ein nichtlinearer Widerstand, der Innenwiderstand eines elektrischen Bauteils, wie eine Stromsensors, eines Shunts, einer elektrischen Spule, einer Diode, oder ein Kaltleiter, also ein PTC, herangezogen. In einer weiteren Alternative wird als Widerstandselement ein MOSFET oder IGBT herangezogen, die ebenfalls mit einer zunehmenden Temperatur einen erhöhten elektrischen Widerstand aufweisen. Zumindest jedoch weist das Widerstandselement eines der vorher genannten Bauteile auf und umfasst zum Beispiel eine Verschaltung von unterschiedlichen der genannten Bauteile. Folglich ist es möglich, eine Vielzahl unterschiedlicher Bauteile heranzuziehen, also auch vergleichsweise kostengünstige. Auch ist es möglich, ein bereits vorhandenes Bauteil als Widerstandselement zu verwenden, das eine andere Funktion wahrnimmt. Somit sind Herstellungskosten nicht erhöht. Auch fällt über derartige Bauteile ohne eine entsprechende Ansteuerung bereits mit steigendem, über den Hauptstrompfad geführten elektrischen Strom eine zunehmende elektrischen Spannung an, sodass das Kommutieren des elektrischen Stroms auf die zweite Antriebseinheit erfolgt. Infolgedessen ist eine Robustheit erhöht. Jedoch erfolgt im Wesentlichen lediglich ein Betrieb der zweiten Antriebseinheit bei einem elektrischen Überstrom.

Beispielsweise ist der Schutzschalter lediglich mittels des Hauptstrompfads mit dem Widerstandselement, des mechanischen Schalters, ggf. der Steuereinheit sowie des Antriebs gebildet. Besonders bevorzugt jedoch umfasst der Schutzschalter eine Sicherung. Beispielsweise ist die Sicherung parallel zu dem mechanischen Schalter geschaltet, und diese ist insbesondere derart ausgestaltet, dass diese auslöst, wenn der mechanische Schalter eine Fehlfunktion aufweist. Auf diese Weise ist eine Sicherheit erhöht. Besonders bevorzugt jedoch ist die Sicherung parallel zu dem mechanischen Schalter geschaltet. Wenn der mechanische Schalter geschlossen ist, fließt der elektrische Strom über diesen, und an der Sicherung liegt im Wesentlichen keine elektrische Spannung an. Bei Betätigen des mechanischen Schalters, also wenn dieser geöffnet wird, kommutiert der elektrische Strom auf die Sicherung, sodass zwischen dem Bewegkontakt und dem Festkontakt kein Lichtbogen entsteht. Aufgrund des über die Sicherung fließenden (elektrischen) Stroms löste die Sicherung zweckmäßigerweise aus, sodass der Stromfluss über die Sicherung unterbrochen wird. Zu diesem Zeitpunkt ist geeigneterweise der Bewegkontakt aufgrund des Antriebs von dem Festkontakt schon so weit beabstandet, dass kein Lichtbogen mehr entsteht. Infolgedessen ist der elektrische Stromfluss über den Schutzschalter beendet. Zusammenfassend erfolgt ein vergleichsweise sicheres Unterbrechen des elektrischen Stroms, wobei das Ausbilden eines Lichtbogens, über den noch weiterhin elektrische Strom geführt wird, unterbunden ist.

Beispielsweise ist die Sicherung derart ausgestaltet, dass mittels dieser der bei Normalbetrieb auftretende elektrische Strom getragen werden kann, also dass in diesem Fall die Sicherung nicht auslöst. Vorzugsweise jedoch ist die Sicherung derart bemessen, dass diese auslöst, wenn bei Normalbedingungen, also wenn kein Fehlerfall vorliegt, der Schalter geöffnet wird. Auf diese Weise ist ein Schaltverhalten des Schutzschalters im Fehlerfall beschleunigt. Zudem ist es auf diese Weise möglich, eine vergleichsweise kostengünstige Sicherung heranzuziehen, die lediglich für einen geringen Nennstrom ausgelegt ist, und insbesondere als flinke Sicherung ausgestaltet ist. Hierbei erfolgt die Betätigung des Schutzschalters, also das Auslösen, mittels Betätigens des Antriebs, was vergleichsweise genau eingestellt werden kann. Die Sicherung dient lediglich dem kurzzeitigen Führen des elektrischen Stroms, um das Ausbilden des Lichtbogens bei dem mechanischen Schalter zu unterbinden oder zumindest zu verkürzen. Somit ist es möglich, auch Sicherungen mit einer vergleichsweise großen Fehlertoleranzen heranzuziehen, weswegen Herstellungskosten reduziert sind. Aufgrund des mechanischen Schalters ist dabei ein vergleichsweise genaues Einstellen des Schutzschalters möglich, also wann dieser auslöst.

Alternativ oder in Kombination hierzu ist parallel zu dem mechanischen Schalter ein Halbleiterschalter geschaltet. In einer Weiterbildung ist der Halbleiterschalter parallel zu der Reihenschaltung aus dem mechanischen Schalter und dem Widerstandselement geschaltet, also auch zu der Reihenschaltung aus der zweiten Antriebseinheit und dem mechanischen Schalter. Insbesondere wird als Halbleiterschalter ein MOSFET, ein IGBT, ein IGCT oder GTO herangezogen. Der Halbleiterschalter ist beispielsweise mittels einer separaten Spannungsversorgung, beispielsweise über den Steuerkreis, versorgt. Alternativ wird der Halbleiterschalter mittels der elektrischen Spannung versorgt, die über den (geöffneten/öffnenden) mechanischen Schalter bzw. die zweite Antriebseinheit abfällt. Insbesondere ist dabei die Verschaltung derart, dass beim Öffnen des mechanischen Schalters und/oder bei Betrieb der zweiten Antriebseinheit der Halbleiterschalter stromführend wird, sodass sich bei dem mechanischen Schalter kein Lichtbogen ausbildet. Auch wird zum Beispiel die etwaige Bestromung der zweiten Antriebseinheit beendet. Folglich erfolgt mittels des Halbleiterschalters auch ein Begrenzen der maximal an der zweiten Antriebseinheit anliegenden elektrischen Spannung, sodass diese hierdurch geschützt ist. Nachdem der mechanische Schalter geöffnet ist, wird insbesondere der Halbleiterschalter ebenfalls geöffnet, sodass der elektrische Strom unterbrochen wird.

Bei Normalbetrieb ist zweckmäßigerweise der Halbleiterschalter nicht stromführend, also wenn der mechanische Schalter geschlossen ist, sodass bei dem Halbleiterschalter keine elektrischen Verluste auftreten, weswegen ein Wirkungsgrad verbessert ist. Bevorzugt ist dem Halbleiterschalter eine separate Steuereinheit zugeordnet, oder dieser wird zum Beispiel mittels der etwaigen Steuereinheit betrieben, mittels derer auch der Antrieb, insbesondere die erste Antriebseinheit, bestromt ist. Somit ist eine Anzahl an benötigten Bauteilen verringert.

Besonders bevorzugt weist der Schutzschalter einen weiteren Halbleiterschalter auf, der in Reihe mit dem Halbleiterschalter geschaltet ist, wobei mittels der Reihenschaltung der mechanische Schalter überbrückt ist. Dabei sind die beiden Halbleiterschalter zweckmäßigerweise antiseriell verschaltet. Alternativ sind die beiden Halbleiterschalter antiparallel verschaltet. Infolgedessen ist der Schutzschalter bidirektional betreibbar. Beispielsweise sind die beiden Halbleiterschalter zueinander baugleich oder unterschiedlich. In einer weiteren Alternative ist anstatt dem weiteren Halbleiterschalter eine Diode elektrisch zu dem Halbleiterschalter in Reihe geschaltet. In einer Weiterbildung ist der mechanische Schalter mit einer Verschaltung überbrückt, die den Halbleiterschalter aufweist, der elektrisch zwischen zwei Paaren von jeweils zwei Dioden geschaltet ist, die jeweils zueinander antiparallel geschaltet sind. Mit anderen Worten ist ein B4-Brückenschaltung vorhanden, mittels der insbesondere ein Gleichrichter realisiert ist. Mittels der Dioden wird hierbei sichergestellt, dass die Richtung des Stromflusses über den Halbleiterschalter stets gleich ist, unabhängig von der Stromflussrichtung über den Hauptstrompfad. Somit ist der Schutzschalter bidirektional ausgestaltet, wobei lediglich der einzige Halbleiterschalters vorhanden ist.

Alternativ oder in Kombination hierzu ist zweckmäßigerweise parallel zu dem oder den Halbleiterschaltern bzw. der Reihenschaltung ein Varistor geschaltet, mittels dessen insbesondere eine elektrische Überspannung an dem Halbleiterschalter bzw. der Verschaltung, vermieden ist, der zu einer Beschädigung führen könnte. In einer weiteren Alternative umfasst der Schutzschalter mehrere Thyristoren, die antiparallel zueinander verschaltet sind, und mittels derer der mechanische Schalter überbrückt ist.

Besonders bevorzugt umfasst der mechanische Schalter eine Löschkammer, innerhalb derer zweckmäßigerweise die Kontaktbrücke angeordnet ist. Beispielsweise umfasst die Löschkammer hierbei mehrere Löschbleche und/oder einen Permanentmagneten, mittels dessen ein etwaiger, beim Betätigen des mechanischen Schalters zwischen dem Bewegkontakt und dem Festkontakt entstehender Lichtbogen abgelöscht wird.

Bevorzugt umfasst die Löschkammer in einer Stapelrichtung übereinander gestapelte Löschstreifen, also mehrere Löschstreifen, insbesondere mindestens zwei Löschstreifen und geeigneterweise weniger als 100 Löschstreifen. Vorzugsweise beträgt die Anzahl der Löschstreifen zwischen 5 und 80, zwischen 8 und 50 oder zwischen 10 und 30. Geeigneterweise ist die Anzahl der Löschstreifen kleiner gleich 20. Die Löschstreifen sind flächig ausgestaltet und erstrecken sich somit jeweils lediglich einer Ebene. Senkrecht zu dieser Ebene ist die Ausdehnung jedes Löschstreifens verringert, und die Ausdehnung, die auch als Dicke bezeichnet ist, ist zweckmäßigerweise kleiner oder gleich 2 mm, 1,5 mm oder 1 mm. Die Löschstreifen sind zweckmäßigerweise senkrecht zur Stapelrichtung angeordnet sowie jeweils parallel zueinander. Vorzugsweise überdecken sich dabei die Projektionen der Löschstreifen parallel zur Stapelrichtung zumindest teilweise, vorzugsweise vollständig. Somit ist eine vergleichsweise kompakte Löschkammer bereitgestellt.

Die Löschstreifen sind aus einer Keramik erstellt, die insbesondere elektrischen nicht leitend und vorzugsweise thermisch leitend ist. Besonders bevorzugt wird als Keramik eine Oxid-Keramik wie zum Beispiel eine Aluminium-Oxid Keramik (AlO3) verwendet. Beispielsweise umfasst die Löschkammer, ein Treibelement zum Treiben des etwaigen bei einem Schaltvorgang des mechanischen Schalters entstehenden Lichtbogens zu oder zwischen die Löschstreifen. In einer Weiterbildung ist elektrisch parallel zu dem Widerstandselement eine Drossel oder eine sonstige elektrische Spule geschaltet, mittels derer insbesondere ein elektrischer Stromanstieg begrenzt wird, wenn der mechanische Schalter geöffnet wird. In einer Weiterbildung ist die Drossel bzw. die elektrische Spule elektrisch in Reihe mit dem etwaigen Halbleiterschalter geschaltet, mittels dessen die Reihenschaltung aus dem mechanischen Schalter und dem Widerstandselement überbrückt ist. Besonders bevorzugt wird die Drossel bzw. elektrische Spule als Treibelement herangezogen, mittels derer der Lichtbogen bewegt wird. Mit anderen Worten handelt es sich somit um eine Blasfeldspule.

Bei Betrieb wird aufgrund der Ausbildung der Löschstreifen als elektrischer Isolator der Lichtbogen nicht mittels der Löschstreifen teilweise aufgefangen, sodass mehrere Teillichtbögen ausgebildet werden. Vielmehr wird aufgrund der elektrisch isolierenden Eigenschaften der Löschstreifen der Lichtbogen verformt, insbesondere gebogen, sodass eine Länge des Lichtbogens verlängert ist. Aufgrund der vergrößerten Länge des Lichtbogens und der damit einhergehenden höheren erforderlichen elektrischen Spannung ist es möglich, dass der Lichtbogen erlischt. Somit weist bei Erlöschen der Lichtbogen eine Länge auf, die anderweitig lediglich mit einer vergrößerten Löschkammer erreicht werden kann.

Zudem erfolgt mittels der Löschstreifen eine Abkühlung des Lichtbogens, nämlich des zur Ausbildung des Lichtbogens erforderlichen Plasmas. Infolgedessen steigt ebenfalls die elektrische Spannung, die zum Aufrechterhalten des Lichtbogens erforderlich ist, und bei einer ausreichenden Abkühlung erlischt der Lichtbogen. Dabei erfolgt aufgrund der thermischen Leitfähigkeit der Löschstreifen ein effizienter Abtransport der Wärme von dem Bereich der Löschstreifen, in dem der Wärmeeintrag von dem Lichtbogen in den jeweiligen Löschstreifen erfolgt. Infolgedessen ist eine Kühlwirkung weiter verbessert, sodass auch bei einer verringerten Baugröße der Löschkammer ein sicheres Ablöschen des Lichtbogens erfolgt. Zudem ist aufgrund der separaten Löschstreifen auch bei einer unregelmäßigen Erwärmung dieser eine sich deswegen ausbildende mechanische Spannung auf die einzelnen Löschstreifen beschränkt. Daher bilden sich auch bei einer vergleichsweise großen Temperaturdifferenz zwischen den einzelnen Löschstreifen keine mechanische Spannung zwischen diesen aus, die zu einer Zerstörung führen könnte. Infolgedessen ist eine Stabilität und Betriebssicherheit erhöht.

Das Kraftfahrzeug ist beispielsweise landgebundenen und zum Beispiel ein Personenkraftwagen (Pkw). Besonders bevorzugt jedoch ist das Kraftfahrzeug ein Nutzkraftwagen, wie ein Bus oder besonders bevorzugt ein Lastkraftwagen (Lkw). Das Kraftfahrzeug weist ein Hochvoltbordnetz auf, mittels dessen insbesondere eine Gleichspannung zwischen 400 V und 800 V geführt ist. Ferner umfasst das Kraftfahrzeug ein Niedervoltbordnetz, mittels dessen zweckmäßigerweise eine Gleichspannung von 12 V, 24 V oder 48 V geführt ist. Hierbei dient das Niedervoltbordnetz insbesondere der Bestromung von Nebenaggregaten des Kraftfahrzeugs, mittels derer beispielsweise eine Bereitstellung von Komfortfunktionen oder dergleichen realisiert wird. Das Hochvoltbordnetz dient insbesondere der Bestromung eines Hauptantriebs, der zweckmäßigerweise einen Elektromotor aufweist. Hierbei ist mittels des Hochvoltbordnetzes vorzugsweise der Hauptantrieb mit einer Hochvoltbatterie elektrisch verbunden, mittels derer das Hochvoltbordnetz gespeist ist. Das Niedervoltbordnetz ist zum Beispiel über einen Transformator durch das Hochvoltbordnetz gespeist oder mittels einer separaten Batterie.

Das Kraftfahrzeug umfasst einen Schutzschalter mit einem in einen Hauptstrompfad eingebrachten mechanischen Schalter, der einen Festkontakt und einen an einer dazu beweglich gelagerten Kontaktbrücke angebundenen Bewegkontakt aufweist. Der Schutzschalter weist ferner einen Antrieb auf, der in Wirkverbindung mit der Kontaktbrücke ist, und der eine erste Antriebseinheit und eine zweite Antriebseinheit umfasst. Die erste Antriebseinheit ist mittels eines Steuerkreises bestromt, und die zweite Antriebseinheit ist parallel zu einem in den Hauptstrompfad eingebrachten Widerstandselement geschaltet. Infolgedessen ist eine Bestromung der zweiten Antriebseinheit mittels des Hauptstrompfads möglich, nämlich dann, wenn der elektrische Widerstand des Widerstandselements größer als der elektrische Widerstand der zweiten Antriebseinheit ist.

Der Steuerkreis ist elektrisch mit dem Niedervoltbordnetz verbunden und somit mittels des Niedervoltbordnetzes gespeist. Das Hochvoltbordnetz weist den Hauptstrompfad des Schutzschalters auf, der somit einen Teil des Hochvoltbordnetzes bildet und in dieses eingebracht ist. Folglich befindet sich der mechanische Schalter und die erste Antriebseinheit auf unterschiedlichen elektrischen Potentialen. Bei Betätigung des Schutzschalters wird das Hochvoltbordnetz aufgetrennt, sodass über dieses zumindest teilweise ein elektrischer Stromfluss unterbunden ist.

### Ferner betrifft die Erfindung auch die Verwendung eines derartigen Schutzschalters zur Absicherung eines Hochvoltbordnetz ist eines Kraftfahrzeugs

Die im Zusammenhang mit dem Schutzschalter erläuterten Weiterbildungen und Vorteile sind sinngemäß auch auf das Kraftfahrzeug zu übertragen und umgekehrt.

Nachfolgend werden Ausführungsbeispiele der Erfindung anhand einer Zeichnung näher erläutert. Darin zeigen:
- Fig. 1: schematisch ein Kraftfahrzeug mit einem Schutzschalter,
- Fig. 2: einen vereinfachten Schaltplan des Schutzschalter, der einen "Moving Magnet Aktuator" mit zwei Antriebseinheiten umfasst, und
- Fig. 3: schematisch den "Moving Magnet Aktuator" in einer Schnittdarstellung,
- Fig. 4 -6: gemäß Fig. 2 jeweils eines alternative Ausführungsform des Schutzschalters, und
- Fig. 7: perspektivisch eine Löschkammer des mechanischen Schalters.

Einander entsprechende Teile sind in allen Figuren mit den gleichen Bezugszeichen versehen.

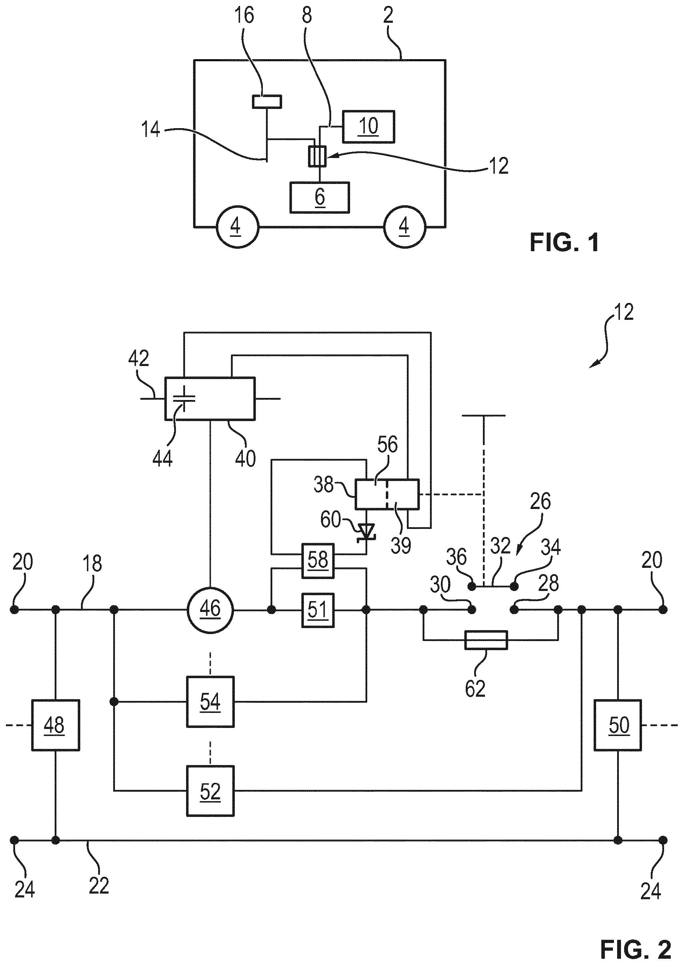

In Figur 1 ist schematisch vereinfacht ein Kraftfahrzeug 2 in Form eines Lastkraftwagens (Lkw) dargestellt. Das Kraftfahrzeug 2 weist mehrere Räder 4 auf, mittels derer ein Kontakt zu einer nicht näher dargestellten Fahrbahn erfolgt. Zumindest eines der Räder 4 ist mittels eines Hauptantriebs 6 angetrieben, der einen oder mehrere Elektromotoren umfasst. Mit anderen Worten ist das Kraftfahrzeug 2 entweder als Hybrid-Kraftfahrzeug oder Elektrokraftfahrzeug ausgestaltet.

Der Hauptantrieb 6 ist über ein Hochvoltbordnetz 8 mit einer Hochvoltbatterie 10 verbunden. Mittels der Hochvoltbatterie 10 wird somit das Hochvoltbordnetz 8 gespeist sowie der Hauptantrieb 6 betrieben. Von der Hochvoltbatterie 10 wird hierbei eine elektrische Gleichspannung zwischen 400 V und 800 V bereitgestellt, wobei die zwischen der Hochvoltbatterie 10 und dem Hauptantrieb 6 fließenden elektrischen Ströme mehrere 10 A betragen können. Ferner ist das Hochvoltbordnetz 8 mit einem nicht näher dargestellten Ladeanschluss verbunden, sodass über den Ladeanschluss und das Hochvoltbordnetz 8 die Hochvoltbatterie 10 geladen werden kann.

In das Hochvoltbordnetz 8 ist ein Schutzschalter 12 eingebracht, mittels dessen eine Absicherung des Hochvoltbordnetzes 8 erfolgt. Dabei ist es möglich, mittels des Schutzschalter 12 einen elektrischen Stromfluss zwischen der Hochvoltbatterie 10 sowie dem Hauptantrieb 6 zu unterbinden. Der Schutzschalter 12 löst hierbei in einem Fehlerfall aus, sodass im Fehlerfall, beispielsweise bei einer Beschädigung des Hauptantriebs 6, eine weitere Beschädigung oder ein unkontrolliertes Verhalten des Hauptantriebs 6 und auch eine Gefährdung von Insassen oder Passanten vermieden ist. Ferner ist der Schutzschalter 12 mit einem nicht näher dargestellten Bordcomputer signaltechnisch verbunden, mittels dessen unter Einbeziehung des Schutzschalters 12 sichere Funktionen ausgeführt oder Aufforderungen zur Durchführung von sicheren Funktionen an den Schutzschalter 12 übermittelt werden, die im Anschluss hieran mittels dessen zumindest teilweise durchgeführt werden. Folglich dient der Schutzschalter 12 auch der Bereitstellung von funktionaler Sicherheit.

Der Schutzschalter 12 ist ferner elektrisch mit einem Niedervoltbordnetz 14 verbunden, das mittels einer Batterie 16 gespeist ist. Mittels der Batterie 16 wir bei Betrieb eine Gleichspannung in Höhe von 24 V bereitgestellt, und mit dem Niedervoltbordnetz 14 werden nicht näher dargestellte Nebenaggregate bestromt, die dem Betrieb des Hauptantriebs 6 und/oder der Bereitstellung von Komfortfunktionen dienen.

In Figur 2 ist ein vereinfachter Schalterplan des Schutzschalters 12 dargestellt. Der Schutzschalter 12 weist einen Hauptstrompfad 18 auf, der sich zwischen zwei Anschlüssen 20 erstreckt. Die beiden Anschlüsse 20 sind dabei Schraub- oder Steckanschlüsse sowie in ein nicht näher dargestelltes Gehäuse des Schutzschalters 12 eingebracht, das aus einem Kunststoff gefertigt ist. Der Schutzschalter 12 weist ferner einen weiteren Hauptstrompfad 22 auf, der sich zwischen zwei weiteren Anschlüssen 24 erstreckt, die baugleich zu den Anschlüssen 20 sind. Der Hauptstrompfad 18 sowie der weitere Hauptstrompfad 22 bilden einen Teil des Hochvoltbordnetzes 8, das somit den Hauptstrompfad 18 aufweist. Hierfür sind die Anschlüsse 20 sowie die weiteren Anschlüsse 24 mit entsprechenden Kabeln oder sonstigen Leitungen des Hochvoltbordnetzes 8 elektrisch kontaktiert.

Der weitere Hauptstrompfad 22 ist lediglich mittels einer Stromschiene erstellt, die aus einem Metall, wie Kupfer oder Messing, erstellt ist. Über die weiteren Anschlüsse 24 ist der weitere Hauptstrompfad 22 mit Masse verbunden, und bei Normalbetrieb des Kraftfahrzeugs 2 liegt zwischen dem Hauptstrompfad 18 sowie dem weiteren Hauptstrompfad 22 die mittels der Hochvoltbatterie 10 bereitgestellte elektrische Gleichspannung an. Mit anderen Worten sind der Hauptstrompfad 18 sowie der weitere Hauptstrompfad 22 unterschiedlichen Polen der Hochvoltbatterie 10 zugeordnet.

In den Hauptstrompfad 18 ist ein mechanischer Schalter 26 eingebracht, mittels dessen somit die beiden Anschlüsse 20 verbunden sind, und der als Doppelunterbrecher ausgestaltet ist. Hierfür weist der mechanische Schalter 26 einen Festkontakt 28 sowie einen weiteren Festkontakt 30 auf, die mittels jeweils einer starren Stromschiene mit einem der Anschlüsse 20 starr verbunden und zueinander beabstandet sind. Die beiden Festkontakte 28, 30 sind aus einem von dem Material der zugeordneten Stromschienen abweichenden Material erstellt, das insbesondere vergleichsweise abbrandsicher ist.

Der mechanische Schalter 26 umfasst ferner eine Kontaktbrücke 32 die mittels einer weiteren Stromschiene gebildet ist, die längsverschieblich, also beweglich, mittels einer nicht näher dargestellten Führung des Gehäuses des Schutzschalters 12 gelagert ist. An den gegenüberliegenden Enden der Kontaktbrücke 32 ist ein Bewegkontakt 34 sowie ein weiterer Bewegkontakt 36 angebunden, nämlich geschweißt, wobei das Material der Bewegkontakte 34, 36 dem Material der Festkontakte 28, 30 entspricht.

Mittels Verschiebens der Kontaktbrücke 32 ist es möglich, den Bewegkontakt 34 in mechanisch direkten Kontakt mit dem Festkontakt 28 sowie den weiteren Bewegkontakt 36 in mechanisch direkten Kontakt mit dem weiteren Festkontakt 30 zu verbringen, sodass diese jeweils elektrisch leitend verbunden sind. Infolgedessen besteht eine niederohmige elektrische Verbindung zwischen den beiden Anschlüssen 20, und der mechanische Schalter 26 ist elektrisch leitend. Mit anderen Worten ist der mechanische Schalter 26 geschlossen. Ferner ist möglich, mittels Verstellens der Kontaktbrücke 32 die jeweils zugeordneten Kontakte 28, 30, 34, 36 voneinander zu beabstanden. In diesem Fall ist der mechanische Schalter 26 elektrisch nicht leitend und somit geöffnet.

Die Kontaktbrücke 32 ist mittels eines Antriebs 38 angetrieben, sodass bei Betrieb des Antriebs 38 die Kontaktbrücke 32 verstellt und somit der mechanische Schalter 26 geschlossen oder geöffnet wird. Folglich ist der Antrieb 38 in Wirkverbindung mit der Kontaktbrücke 32, nämlich mechanisch mit dieser gekoppelt. Der Antrieb 38 weist eine erste Antriebseinheit 39, die mittels einer Steuereinheit 40 bestromt ist. Hierfür ist die Steuereinheit 40 elektrisch mit dem Antrieb 38, nämlich der ersten Antriebseinheit 39, verbunden. Zur Bestromung der Steuereinheit 40, und folglich der ersten Antriebseinheit 39, ist die Steuereinheit 40 mit einem Steuerkreis 42 elektrisch kontaktiert, mittels dessen eine Gleichspannung bereitgestellt ist. Der Steuerkreis 42 ist elektrisch direkt mit dem Niedervoltbordnetz 14 kontaktiert, sodass auch mittels des Steuerkreises 42 die Gleichspannung in Höhe von 24 V geführt ist. Zusammenfassend ist somit die erste Antriebseinheit 39 mittels des Steuerkreises 42 bestromt.

Die Steuereinheit 40 weist einen Energiespeicher 44 in Form eines Kondensators auf, der über den Steuerkreis 42 geladen ist, und der elektrisch parallel zu einem Mikrocontroller der Steuereinheit 40 geschaltet ist. Somit werden mittels des Energiespeichers 44 Schwankungen der elektrischen Spannung und/oder des elektrischen Stroms des Niedervoltbordnetz 14 abgefangen, sodass eine Beschädigung des Mikrocontrollers hierdurch vermieden ist. Auch ist es aufgrund des Energiespeichers 44 möglich, bei einem Ausfall des Niedervoltbordnetzes 14 zumindest einmal den Antrieb 38 zu betätigen und auf diese Weise den Schalter 26 zu öffnen.

In einer näher dargestellten Variante weist die Steuereinheit 40 zudem eine Ladungspumpe auf, mittels derer es ermöglicht ist, die an dem Kondensator 44 anliegende elektrische Spannung im Vergleich zu der mittels des Niedervoltbordnetzes 14 bereitgestellten elektrischen Spannung zu erhöhen, sodass die mittels des Energiespeichers 44 gespeicherte Energiemenge vergrößert ist. Somit ist stets ein sicherer Betrieb des Antriebs 38 möglich, auch wenn ein vollständiger Ausfall des Niedervoltbordnetzes 14 vorliegt oder der Antrieb 38 geringfügig blockiert ist.

Mittels des Mikrocontrollers wird die Bestromung der ersten Antriebseinheit 39 eingestellt, und dieser ist mit einem Stromsensor 46 des Hauptstrompfads 18 signaltechnisch verbunden. Der Stromsensor 46 ist in den Hauptstrompfad 18 eingebracht und als Shunt gestaltet. Somit ist mittels des Stromsensors 46 ein Messen des mittels des Hauptstrompfads 18 geführten elektrischen Stroms ermöglicht. Ferner weist der Schutzschalter 12 einen ersten Spannungssensor 48 auf, mittels dessen die zwischen einem der Anschlüsse 20 und einem der weiteren Anschlüsse 24 anliegende elektrische Spannung gemessen werden kann. Mittels eines zweiten Spannungssensors 50 ist die zwischen dem verbleibenden Anschluss 20 und dem verbleibenden weiteren Anschluss 24 anliegende elektrische Spannung messbar.

Mittels eines dritten Spannungssensors 52 ist die über die Reihenschaltung aus dem Stromsensor 46 und einem zwischen dem Stromsensor 46 und den Schalter 26 in den Hauptstrompfad 18 eingebrachten Widerstandselements 51 abfallende elektrische Spannung messbar, und mittels eines vierten Spannungssensors 54 ist die über die Reihenschaltung aus dem Stromsensor 46, dem Widerstandselements 51 und dem mechanischen Schalter 26 abfallende elektrische Spannung messbar. Sämtliche Spannungssensoren 48, 50, 52, 54 sind signaltechnisch mit der Steuereinheit 40, nämlich dem Mikrocontroller verbunden.

Bei Betrieb wird mittels des Mikrocontrollers der Steuereinheit 40 die zeitliche Änderung der mittels der Spannungssensoren 48, 50 52, 54 gemessenen elektrischen Spannungen sowie des mittels des Stromsensors 46 gemessenen elektrischen Stroms überprüft. Wenn die zeitliche Änderung des gemessenen Stroms einem Anstieg entspricht und einen bestimmten Grenzwert überschreitet, wird mittels der Steuereinheit 40 der Antrieb 38, nämlich die erste Antriebseinheit 39, angesteuert, sodass der Schalter 26 geöffnet wird. Der Grenzwert ist derart gewählt, dass dieser lediglich in einem Fehlerfall, nämlich bei einem elektrischen Kurzschluss des Elektromotors des Hauptantriebs 6, überschritten wird. Aufgrund der Betätigung des mechanischen Schalter 26 wird der elektrische Strom unterbrochen und somit eine weitere Zerstörung des Elektromotors oder weitere Komponenten des Hauptantriebs 6 vermieden. Ebenso erfolgt das Betätigen des mechanischen Schalter 26 mittels der Steuereinheit 40, wenn anhand der mittels der Spannungssensoren 48, 50, 52, 54 erfassten elektrischen Spannung auf den Fehlerfall, wie eine Fehlfunktion von bestimmten Komponenten des Kraftfahrzeugs 2, geschlossen wird.

Elektrisch parallel zu dem Widerstandselement 51, das elektrisch zwischen dem weiteren Festkontakt 30 des mechanischen Schalter 26 sowie dem Stromsensor 46 in den Hauptstrompfad 18 eingebracht ist, ist eine zweite Antriebseinheit 56 des Antriebs 38 geschaltet. Hierbei ist die zweite Antriebseinheit 56 über einen Gleichrichter 58 mit dem Hauptstrompfad 18 elektrisch verbunden. Mittels des Gleichrichters 58, der einen inneren elektrischen Widerstand aufweist, wird sichergestellt, dass der von der zweiten Antriebseinheit 56 getragene elektrische Strom lediglich in eine bestimmte Richtung fließt, unabhängig von der Stromflussrichtung des Hauptstrompfads 18. Somit ist der Schutzschalters 12 bidirektional ausgestaltet, wobei eine Konstruktion der zweiten Antriebseinheit 56 vereinfacht ist. Zwischen den Gleichrichter 58 und die zweite Antriebseinheit 56 ist eine Zener-Diode 60 geschaltet, wobei die Sperrrichtung derart angeordnet ist, dass erst ab einer mittels des Gleichrichters 58 bereitgestellten Mindestspannung die Bestromung der zweiten Antriebseinheit 56 erfolgt.

Das Widerstandselement 51 ist ein Kaltleiter (PTC) und weist im Normalbetrieb einen zu vernachlässigenden ohmschen Widerstand auf. Wenn der mittels des Hauptstrompfads 18 geführte elektrische Strom jedoch über einen Grenzwert ansteigt, nimmt aufgrund von elektrischen Verlusten die Temperatur des Hauptstrompfads 18 und somit auch des Widerstandselements 51 zu, weswegen auch der ohmsche Widerstand des Widerstandselements 51 zunimmt. Wenn der Widerstand dabei größer ist als der Widerstand des dazu parallelgeschalteten Zweigs ist, der die Verschaltung des Gleichrichters 58, des zweiten Antriebsstrangs 56 sowie der Zener-Diode 60 aufweist, kommutiert der elektrische Strom von dem Widerstandselement 51 auf den hierzu parallelgeschalteten Zweig und somit auch auf die zweite Antriebseinheit 56, die somit bestromt wird. Infolgedessen wird mittels der zweiten Antriebseinheit 56 eine Kraft ausgeübt, die auf die Kontaktbrücke 32 wirkt, sodass die Bewegkontakte 34, 36 von den jeweils zugeordneten Festkontakten 28,30 beabstandet und folglich der mechanische Schalter 26 geöffnet wird.

Infolgedessen wird bei einem vergleichsweise hohen elektrischen Strom auch mittels der zweiten Antriebseinheit 56 der mechanische Schalter 26 geöffnet. Hierbei ist es möglich, beide Antriebseinheiten 39, 56 zum Öffnen des mechanischen Schalter 26 zu verwenden. In diesem Fall wird eine vergleichsweise große Kraft auf die Kontaktbrücke 32, weswegen eine Schaltzeit verkürzt ist und somit der mechanische Schalter 26 in einer vergleichsweise kurzen Zeitdauer geöffnet wird. Folglich wird der Stromfluss zwischen den beiden Anschlüssen 20 innerhalb der vergleichsweise kurzen Zeitdauer unterbunden. Ferner ist auf diese Weise eine Redundanz gegeben, weswegen eine Sicherheit erhöht ist.

Jedoch ist es auch möglich, jede der Antriebseinheiten 39, 56 separat voneinander zu betreiben. In diesem Fall ist die auf die Kontaktbrücke 32 wirkende Kraft verringert, sodass eine mechanische Belastung ebenfalls verringert ist. Auch ist es möglich, die erste Antriebseinheit 39 aufgrund der Steuereinheit 40 bei Fehlerfällen zu bestromen, bei denen beispielsweise kein Überstrom auftritt, oder bei denen die über dem Widerstandselement 51 abfallende elektrische Spannung nicht ausreicht, dass der elektrische Strom auf die zweite Antriebseinheit 56 kommutiert.

Wenn der mechanische Schalter 26 geöffnet wird, und der Fehlerfall vorliegt, liegt zwischen den Anschlüssen 20 während des Öffnens des Schalter 26 eine vergleichsweise hohe elektrische Spannung an. Infolgedessen bildet sich zwischen den Festkontakten 28, 30 und dem jeweils zugeordneten und sich wegbewegenden Bewegkontakt 34, 36 jeweils ein Lichtbogen aus, über den auch weiterhin ein Stromfluss erfolgt. Jedoch nimmt die über den mechanischen Schalter 26 abfallende elektrische Spannung zu. Infolgedessen kommutiert der elektrische Strom von dem elektrischen Schalter 26 auf eine parallel hierzu geschaltete Sicherung 56. Somit fließt der elektrische Strom zwischen den beiden Anschlüssen 20 über die Sicherung 62, weswegen die Lichtbögen erlöschen.

Die Sicherung 62 ist derart bemessen, dass diese im Fehlerfall auslöst. Die Schwelle, ab der die Sicherung 62 dabei auslöst, liegt zwischen dem Wert des elektrischen Stroms im Normalbetrieb und dem Wert des elektrischen Stroms, der sich bei einem Kurzschluss ergibt, wobei der genaue Wert der Schwelle dazwischen beliebig gewählt werden kann, ohne dass die Funktionsweise des Schutzschalters 12 abgeändert ist. Somit können Fehlertoleranzen bei der Sicherung 62 vergleichsweise groß gewählt werden, weswegen Herstellungskosten reduziert sind. Nach dem Auslösen der Sicherung 62 wird mittels dieser ebenfalls kein elektrischer Strom mehr geführt, und die beiden Anschlüsse 20 sind zueinander galvanisch getrennt.

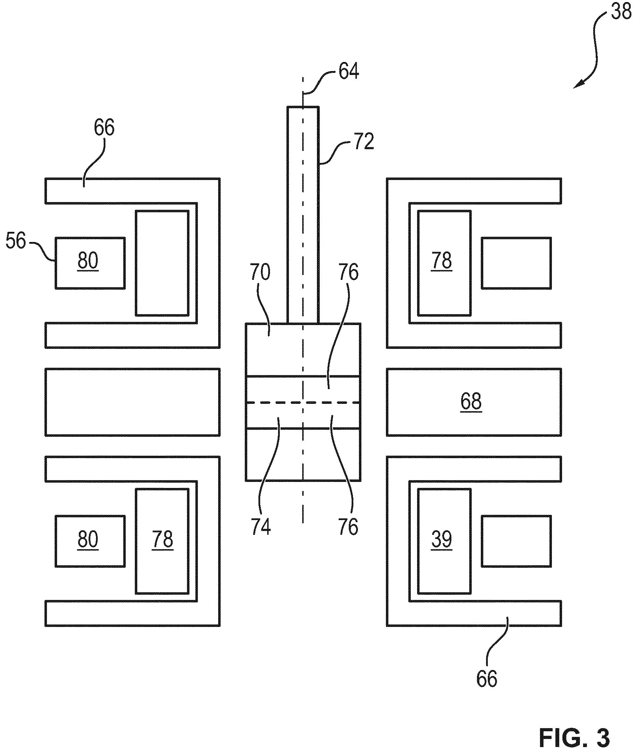

In Figur 3 ist in einer Schnittdarstellung entlang einer Achse 64 der Antrieb 38 schematisch dargestellt. Der Antrieb 38 ist als "Moving Magnet Aktuator" ausgestaltet und weist somit zwei konzentrisch zu der Achse 64 und entlang dieser beabstandet angeordnete scheibenspulen- oder trommelartige Halter 66 auf, die aus einem ferromagnetischen Material erstellt sind. Zwischen diesen ist ein ringförmiges Kurzschlussblech 68 konzentrisch zu der Achse 64 positioniert, das ebenfalls aus einem ferromagnetischen Material erstellt ist. Mittels der Halter 66 und des Kurzschlussblechs 68 ist somit ein Hohlzylinder gebildet, innerhalb dessen ein weiterer Halter 70 aus einem Kunststoff angeordnet und mittels einer nicht näher dargestellten Führung entlang der Achse 64 verschieblich gelagert ist. An dem Halter 70 ist ein sich entlang der Achse 64 erstreckender Stab 72 befestigt, der an der Kontaktbrücke 32 befestigt ist, entweder direkt oder über eine nicht näher dargestellte Mechanik. In den zylinderartigen weiteren Halter 70 ist ein zylinderförmiger Permanentmagnet 74 eingebettet, der zwei magnetische Pole 76 aufweist, von denen jeder jeweils eines der Enden des Permanentmagneten 74 in einer Richtung parallel zur Achse 64 bildet.

Die erste Antriebseinheit 39 des Antriebs 38 umfasst zwei elektrische Spulen 78. Jede der elektrischen Spulen 78, die zueinander baugleich sind, ist auf jeweils einen der Halter 66 gewickelt, und diese sind zueinander elektrisch parallel geschaltet. Die zweite Antriebseinheit 56 weist zwei weitere elektrische Spulen 80 auf, von denen eine auf eine der elektrischen Spulen 78 und die andere auf die verbleibende elektrische Spulen 78 gewickelt ist. Auch die beiden weiteren elektrischen Spulen 80 sind zueinander elektrisch parallel geschaltet. Die Anzahl der Windungen der weiteren elektrischen Spulen 80 ist geringer als die Anzahl der Windungen der elektrischen Spulen 78.

Wenn die beiden Antriebseinheiten 39, 56 nicht bestromt werden, wird aufgrund der magnetischen Wechselwirkung mit dem Kurzschlussblech 68 sowie den Haltern 66 der Permanentmagnet 74 in eine Position im Wesentlichen innerhalb des Kurzschlussblechs 68 gezogen, wobei auf den Permanentmagneten 70 und somit auch auf den weiteren Halter 70 eine Kraft von ca. 30 N wirkt. Mit dieser Kraft wird somit auch die Kurzschlussbrücke 32 in der gewünschten Position gehalten, nämlich in der, bei der der mechanische Schalter 26 geschlossen ist.

Im Fehlerfall wird mittels der Steuereinheit 40 die erste Antriebseinheit 39 bestromt, sodass mittels der elektrischen Spulen 78 jeweils ein Magnetfeld erstellt wird, das mit dem Magnetfeld des Permanentmagneten 74 wechselwirkt. Auch erfolgt eine Bestromung der zweiten Antriebseinheit 56 und somit auch der weiteren elektrischen Spulen 80. Mittels dieser werden die mittels der elektrischen Spulen 78 erstellten Magnetfelder verstärkt. Aufgrund der erstellten Magnetfelder wird der Permanentmagnet 74 von einem der Halter 66 entlang der Achse 64 weggedrückt und zu dem verbleibenden Halter 66 gezogen. Dabei wirken vergleichsweise große Kräfte auf den Permanentmagneten 74 und folglich über den weiteren Halter 70 und den Stab 72 auch auf die Kontaktbrücke 32, sodass der mechanische Schalter 26 vergleichsweise schnell geöffnet wird.

Falls der Fehlerfall nicht vorliegt, und beispielsweise lediglich die Bestromung des Hauptantriebs 6 unterbrochen werden soll, zum Beispiel für eine Wartung, wird mittels der Steuereinheit 40 die erste Antriebseinheit 39 bestromt. Da kein Überstrom vorliegt, kommutiert der elektrische Strom nicht von dem Widerstandselement 51 auf die zweite Antriebseinheit 56, deren weitere elektrische Spulen 80 somit nicht bestromt werden. Folglich wirkt auf die Kontaktbrücke 32 eine verringerte Kraft, und der Schalter 26 wird vergleichsweise langsam geöffnet. Infolgedessen ist eine elektrische und auch eine mechanische Belastung des Schutzschalters 12 reduziert. Da in diesem Fall zwischen den Anschlüssen 20 die anliegende elektrische Spannung begrenzt ist, löst die Sicherung 62 nicht aus, und der Schutzschalter 12 kann, beispielsweise nach Beenden der Wartung, erneut in den elektrisch leitenden Zustand versetzt werden. Hierfür wird beispielsweise die erste Antriebseinheit 39 in die entgegengesetzte Richtung bestromt oder die Bestromung beendet, sodass der Permanentmagnet 74 erneut zu dem Kurzschlussblech 68 gezogen wird.

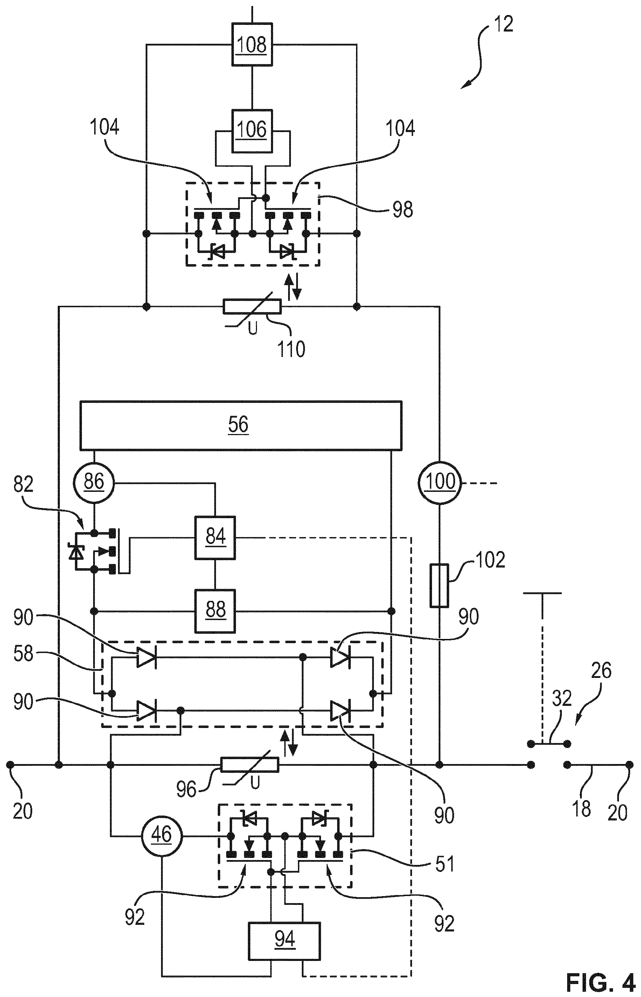

In Figur 4 ist eine alternative Ausgestaltung des Schutzschalters 12 schematisch vereinfacht dargestellt, wobei einige Komponenten, wie der Hauptstrompfad 22 sowie die Spannungssensoren 48 ,50, 52, 54, nicht gezeigt sind. Diese sind jedoch ebenfalls vorhanden, können aber auch, wie ebenfalls bei der vorherigen Ausgestaltungsform, weggelassen werden. Die Sicherung 62 ist bei dieser Ausführungsform weggelassen, jedoch in einer nicht näher dargestellten Variante ebenfalls vorhanden. Die erste Antriebseinheit 39 sowie die Steuereinheit 40 sind nicht gezeigt, sind jedoch, ebenso wie der dargestellte mechanische Schalter 26 nicht abgeändert.

Bei der hier dargestellten Variante ist der Gleichrichter 58 elektrisch parallel zu der Reihenschaltung aus dem Stromsensor 46 und dem Widerstandselement 51 geschaltet. Jedoch ist auch hier die in Figur 2 dargestellte abweichende Anordnung des Stromsensors 46 möglich.

Die zweite Antriebseinheit 56 ist nicht abgeändert, jedoch ist die Zener-Diode 60 durch einen zweiten Schalter 82 ersetzt, der mittels einer zweiten Steuereinheit 84 angesteuert ist. Der zweite Schalter 82 ist ein Halbleiterschalter, und zwischen den Gleichrichter 58 und einen zweiten Stromsensor 86 geschaltet, der zwischen den zweiten Schalter 82 und die zweite Antriebseinheit 56 elektrisch geschaltet ist.

Der zweite Stromsensor 86 dient dem Messen des zu der zweiten Antriebseinheit 56 geleiteten und von dieser getragenen elektrischen Stroms und ist signaltechnisch mit der zweiten Steuereinheit 84 verbunden.

Die Bestromung der zweiten Steuereinheit 84 erfolgt mittels einer zweite Spannungsversorgung 88, die mit den der zweiten Antriebseinheit 56 zugewandten Ausgängen des Gleichrichters 58 elektrisch kontaktiert ist. Folglich wird die zweite Spannungsversorgung 88 und somit auch die zweite Steuereinheit 84 lediglich dann bestromt, wenn die über dem Widerstandselement 51 abfallende elektrische Spannung größer als die des hierzu parallelgeschalteten Zweigs ist. Der zweite Schalter 82 wird von der zweite Steuereinheit 84, sobald diese bestromt wird, geschlossen, sodass die zweite Antriebseinheit 56 bestromt und folglich der mechanische Schalter 26 geöffnet wird. Falls jedoch der Überstrom vergleichsweise groß ist und zu einer Zerstörung der zweiten Antriebseinheit 56 führen könnte, wird mittels der zweiten Steuereinheit 84 der zweite Schalter 82 geöffnet und somit die Bestromung der zweiten Antriebseinheit 56 beendet. Das Ermitteln des zu großen Überstroms erfolgt anhand des mittels des zweite Stromsensor 56 gemessenen elektrischen Stroms. Zudem ist es mittels des zweiten Schalters 82 möglich, eine pulsweitenmodulierte Spannung an die zweite Antriebseinheit 56 anzulegen, sodass die mittels der zweiten Antriebseinheit 56 auf die Kontaktbrücke 32 ausgeübt Kraft begrenzt wird.

Der Gleichrichter 58 weist insgesamt 4 Dioden 90 auf, und ist somit passiv ausgestaltet. Somit ist für den Betrieb des Gleichrichters 58 keine Steuereinheit oder dergleichen erforderlich, sodass eine Robustheit erhöht ist. Das Widerstandselement 51 ist mittels zweier zusätzlicher Schalter 92 gebildet, die jeweils Halbleiterschalter sind, die antiseriell miteinander verschaltet sind. Die zusätzlichen Schalter 92 sind mittels einer zusätzlichen Steuereinheit 94 angesteuert, die mittels des Steuerkreises 42 bestromt ist.

Die zusätzliche Steuereinheit 94 ist signaltechnisch mit dem Stromsensor 46 verbunden. Wenn mittels des Stromsensor 46 der Überstrom gemessen wird, wird dies mittels der zusätzlichen Steuereinheit 94 ausgewertet, und die zusätzlichen Schalter 92 derart angesteuert, dass diese öffnen, also elektrisch sperren. Aufgrund der antiseriellen Verschaltung der beiden zusätzlichen Schalter 92 ist ein Unterbrechen des Stromflusses in beide Richtungen über den Hauptstrompfad 18 möglich.

Nach dem Öffnen der weiteren Schalter 92 weist das Widerstandselement 51 im Wesentlichen schlagartig einen vergleichsweise hohen elektrischen Widerstand auf, und der elektrische Strom kommutiert zu der zweiten Antriebseinheit 56. Damit hierbei eine Überspannung an dem Gleichrichter 58 sowie dem Widerstandselement 51 vermieden ist, ist parallel zu diesen ein Überspannungsschutz 96 geschaltet, der in dieser Variante ein Varistor ist. In einer nicht näher dargestellten Variante ist der Überspannungsschutz 96 mittels Zener-Dioden, TVS-Dioden, einer RCD-Schaltung, einer regelbaren ohmschen Last oder eine Kombination hieraus realisiert.

Die zusätzliche Steuereinheit 94 ist, wie dargestellt, mit der zweiten Steuereinheit 84 signaltechnisch verbunden, und mittels der zusätzlichen Steuereinheit 94 wird die zweite Steuereinheit 84 derart angesteuert, dass der zweite Schalter 82 geschlossen wird, wenn die zusätzlichen Schalter 92 geöffnet werden. In einer nicht näher dargestellten Variante ist die zweite Steuereinheit 84 nicht vorhanden, und deren Funktionen werden mittels der zusätzlichen Steuereinheit 94 übernommen, mittels derer somit der zweite Schalter 82 angesteuert sowie der zweite Stromsensor 86 ausgelesen wird. In einer weiteren Variante ist die signaltechnische Verbindung zwischen der zusätzlichen Steuereinheit 94 und der zweiten Steuereinheit 84 nicht vorhanden, und diese sind separat und unabhängig voneinander.

Bei der hier dargestellten Variante ist parallel zu der Reihenschaltung aus dem Stromsensor 46 und dem Widerstandselement 51 eine Reihenschaltung aus einem zweiten Widerstandselement 98, einem zusätzlichen Stromsensor 100 und einer zusätzlichen Sicherung 102 geschaltet. Jedoch ist auch eine Ausgestaltung des Schutzschalters 12 ohne diese Reihenschaltungen und folglich ohne das zweite Widerstandselement 98 möglich.

Das zweite Widerstandselement 98 mittels zweier zusätzlicher Schalter 104 gebildet, die jeweils als Halbleiterschalter ausgestaltet sind. Dabei sind die beiden Halbleiterschalter 104 antiseriell zueinander geschaltet, sodass mittels dieser ein elektrischer Stromfluss in beide Richtungen unterbrechbar ist. Die beiden zusätzlichen Schalter 104 sind mittels einer zweiten zusätzlichen Steuereinheit 106 betrieben, die mittels einer zweiten zusätzlichen Spannungsversorgung 108 bestromt ist. Die zweite zusätzliche Spannungsversorgung 108 wird anhand der über dem zweite Widerstandselement 98 abfallenden elektrischen Spannung betrieben. Parallel zu dem zweiten Widerstandselement 98 ist ein zweiter Überspannungsschutz 110 geschaltet, der in der dargestellten Variante ebenfalls ein Varistor ist. Jedoch sind auch sämtliche für den Überspannungsschutz 96 möglichen Varianten auch hier einsetzbar. In einer nicht näher dargestellten Ausführungsform wird die Funktionsweise des zweiten Überspannungsschutzes 110, nämlich das Begrenzen der an dem zweiten Widerstandselement 98 anliegenden elektrischen Spannung, auch mittels des Überspannungsschutzes 96 wahrgenommen.

Bei der dargestellten Variante des Schutzschalters 12 weisen die zusätzlichen Schalter 92 einen vergleichsweise geringen Innenwiderstand auf, sodass im Normalbetrieb mittels dieser der mittels des Hauptstrompfads 18 geführte elektrische Strom geführt wird. Dabei ist die über das zweite Widerstandselement 98 abfallende elektrische Spannung vergleichsweise gering, weswegen die zweite zusätzliche Spannungsversorgung 108 und daher auch nicht die zusätzliche Steuereinheit 106 betrieben ist. Infolgedessen sind die zweiten zusätzlichen Schalter 104 geöffnet. Wenn der Fehlerfall auftritt, werden zunächst mittels der zusätzlichen Steuereinheit 94 die zusätzlichen Schalter 92 betätigt. Die sich in dabei ergebende erhöhte, an dem zweiten Widerstandselement 98 abfallende elektrische Spannung führt zum Betrieb der zweiten zusätzliche Spannungsversorgung 108 und daher auch zur Bestromung der zusätzlichen Steuereinheit 106, mittels derer die zweiten zusätzlichen Schalter 104 geschlossen werden. Somit kommutiert der elektrische Strom auf das zweite Widerstandselement 98, also die zweite zusätzlichen Schalter 104. Infolgedessen wird die an dem Widerstandselement 51 maximal anliegende elektrische Spannung begrenzt, und mittels der zusätzlichen Schalter 92 wird lediglich eine vergleichsweise geringe elektrische Spannung geschaltet, sodass für die zusätzlichen Schalter 92 vergleichsweise kostengünstig Halbleiter verwendet werden können.

Erst nachdem die zusätzlichen Schalter 92 stromsperrend sind, werden auch die zweiten zusätzlichen Schalter 104 geöffnet, deren Schaltfähigkeit im Vergleich zu der der zusätzlichen Schalter 92 vergrößert ist. Mit anderen Worten ist ein auch ein Schalten einer vergrößerten elektrische Spannung mittels der zweiten zusätzlichen Schalter 104 möglich, ohne dass eine Zerstörung dieser erfolgt. Im Anschluss fließt der elektrische Strom über die zweite Antriebseinheit 56 sowie gegebenenfalls über die Überspannungsschütze 96, 110, und nachfolgend wird der mechanische Schalter 26 geöffnet.

Solange die zweiten zusätzlichen Schalter 104 stromführend sind, wird der damit getragene elektrische Strom mittels des zusätzlichen Stromsensors 100 gemessen. Wenn der elektrische Strom einen korrespondierenden Grenzwert überschreitet, der zu einer Zerstörung der zweiten zusätzlichen Schalter 104 führen könnte, werden diese mittels der zusätzlichen Steuereinheit 106 geöffnet und somit der Stromfluss unterbrochen. Die zusätzliche Sicherung 102 dient als Redundanz hierfür, insbesondere bei einem Fehlverhalten der zusätzlichen Steuereinheit 106.

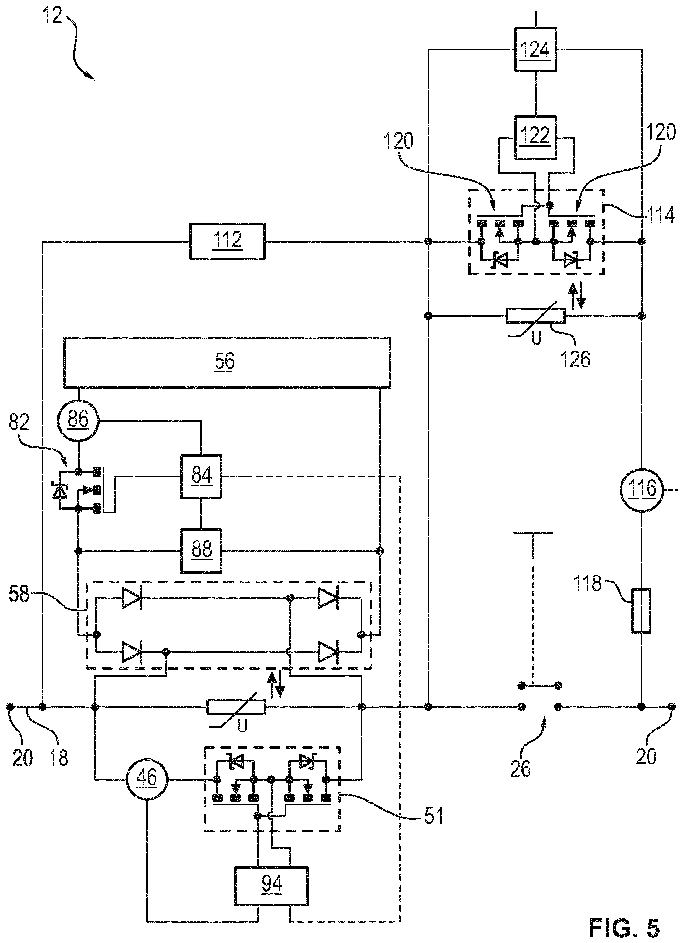

In Figur 5 ist eine weitere Variante des Schutzschalters 12 dargestellt, wobei im Vergleich zur vorhergehenden Ausführungsform die Reihenschaltung mit dem zweiten Widerstandselement 98, den zusätzlichen Stromsensor 100 und der zusätzlichen Sicherung 102 durch eine Drossel 112 ersetzt ist. Mittels dieser wird die zeitliche Änderung des über die zweite Antriebseinheit 56, den Überspannungsschutz 96 und/oder das Widerstandselement 51 geführten elektrischen Stroms begrenzt, wenn der mechanische Schalter 26 betätigt wird, also der Stromfluss über den Hauptstrompfad 18 erstellt oder beendet wird. Somit ist eine Belastung dieser Komponenten verringert. Somit ist es möglich, vergleichsweise kostengünstige Komponenten heranzuziehen. Die generelle Funktionsweise der zweiten Antriebseinheit 56, des Gleichrichters 58, des Widerstandselements 51 sowie der zusätzlichen Steuereinheit 94 und der zweiten Steuereinheit 84 und deren entsprechende Verschaltungen sind hingegen nicht abgeändert.

Der mechanische Schalter 26 ist bei dieser Variante mittels einer Reihenschaltung aus einer Schaltergruppe 114, eines dritten Stromsensors 116 sowie einer dritten Sicherung 118 überbrückt. Die Schaltergruppe 114 umfasst zwei antiseriell zueinander geschaltete Halbleiterschalter 120. Folglich sind dem mechanischen Schalter 26 die zwei Halbleiterschalter 120 parallel geschaltet. Die beiden Halbleiterschalter 120 werden mittels einer weiteren Steuereinheit 122 betrieben und mittels dieser entweder in den elektrisch leitenden oder elektrisch nicht leitenden Zustand versetzt. Die Bestromung der weiteren Steuereinheit 122 erfolgt mittels einer weiteren Spannungsversorgung 124, die entweder mittels einer über den mechanische Schalter 26 abfallende elektrische Spannung oder mittels des Steuerkreises 42 gespeist ist.

Parallel zu der Schaltergruppe 114 ist ein weiterer Überspannungsschutz 126 geschaltet, der in der dargestellten Variante ein Varistor ist. In einer nicht näher dargestellten Variante ist der weitere Überspannungsschutz 126 mittels Zener-Dioden, TVS-Dioden, einer RCD-Schaltung, einer regelbaren ohmschen Last oder eine Kombination hieraus realisiert. Mittels des weiteren Überspannungsschutzes 126 wird eine elektrische Überspannung an der Schaltergruppe 114 sowie der weiteren Steuereinheit 122 und der weiteren Spannungsversorgung 124 vermieden, die anderweitig zu einer Zerstörung dieser führen könnte.

Zusammenfassend entspricht der Aufbau aus dem weiteren Überspannungsschutz 126, der Schaltergruppe 114, der weiteren Steuereinheit 122, der weiteren Spannungsversorgung 124, des dritten Stromsensors 116 sowie der dritten Sicherung 118 dem Aufbau aus dem zweiten Überspannungsschutz 110, dem zweiten Widerstandselement 98, der zweiten zusätzlichen Steuereinheit 106, der zweiten zusätzlichen Spannungsversorgung 108, des zusätzlichen Stromsensors 102 und der zusätzlichen Sicherung 102.

Bei dieser Ausführungsform des Schutzschalters 12 sind die Halbleiterschalter 120 elektrischen nicht leitend, solange der mechanische Schalter 26 geschlossen ist. Wenn der Schalter 26 geöffnet wird, steigt die über der Schaltergruppe 114 anliegende elektrische Spannung an, sodass die weitere Spannungsversorgung 124 betrieben und daher die weitere Steuereinheit 122 bestromt wird. Mittels der weiteren Steuereinheit 122 wird die Schaltergruppe 114, nämlich die einzelnen Halbleiterschalter 120, angesteuert, sodass diese stromführend werden. Infolgedessen kommutiert der elektrische Strom und wird mittels der Schaltergruppe 114 geführt. Daher erlöschen die zwischen den Festkontakten 28, 30 und den jeweiligen Bewegkontakten 34, 36 gebildeten Lichtbögen. Nachfolgend werden die Halbleiterschalter 120 elektrisch derart angesteuert, dass diese elektrische sperren, sodass der elektrische Stromfluss zwischen den beiden Anschlüssen 20 beendet wird.

Mittels des weiteren Überspannungsschutzes 126 wird bis dahin sichergestellt, dass keine Überlastung der Halbleiterschalter 120 erfolgt. Falls mittels des weiteren Stromsensors 116, der signaltechnisch mit der weiteren Steuereinheit 122 verbunden ist, erfasst wird, dass ein vergleichsweise großer elektrischer Strom mit der Schaltergruppe 114 geführt wird, der zu einer Beschädigung der Halbleiterschalter 120 führen könnte, werden die Halbleiterschalter 120 ebenfalls geöffnet und somit eine Beschädigung der Schaltergruppe 114 vermieden. Mittels der weiteren Sicherung 118 wird dabei sichergestellt, dass auch bei einer Fehlfunktion der weiteren Steuereinheit 122 sowie bei einem vergleichsweise hohen elektrischen Strom der Stromfluss über die Schaltergruppe 114 unterbrochen wird.

Bei dieser Variante des Schutzschalters 12 besteht mehrere unterschiedliche Reihenfolgen der Ansteuerung der einzelnen Bauteile, damit der Schutzschalters 12 geöffnet wird. So ist möglich, dass zunächst die Schaltergruppe 114 stromführend ist und anschließend der mechanische Schalter 26 geöffnet wird. Im Anschluss hieran wird die Schaltergruppe 114 in den elektrisch nichtleitenden Zustand überführt. Auf diese Weise erfolgt mittels des Schutzschalters 12 ein lichtbogenarmes Schalten. Es jedoch auch möglich, zunächst den mechanischen Schalter 26 zu betätigen, sodass die weitere Steuereinheit 122 anhand der über den mechanischen Schalter 26 anfallenden elektrischen Spannung bestromt wird. Im Anschluss hieran wir die Schaltergruppe 114 in den elektrisch leitenden Zustand versetzt, sodass die Lichtbögen erlöschen. Nachfolgend wird auch die Schaltergruppe 114 in den elektrisch nicht leitenden Zustand überführt. Bei einer weiteren Ansteuerungsart wird zunächst die Schaltergruppe 114 in den elektrisch leitenden Zustand versetzt und anschließend das Widerstandselement 51 in den elektrisch nicht leitenden Zustand. Folglich wird der mechanische Schalter 26 geöffnet. Nachfolgend wird die Schaltergruppe 114 in den elektrisch nicht leitenden Zustand versetzt, wobei währenddessen oder bis dahin mittels der Drossel 112 der Stromanstieg begrenzt wird.

Bei einer nicht näher dargestellten Weiterbildung ist der Schutzschalters 12 gemäß Figur 5 aufgebaut. Jedoch ist die Überbrückung des mechanischen Schalters 26 weggelassen. Mit anderen Worten sind die Schaltergruppe 114, die weitere Steuereinheit 122, die weitere Spannungsversorgung 124, der weitere Überspannungsschutz 126 sowie der dritte Stromsensor 116 und die dritte Sicherung 118 nicht vorhanden.

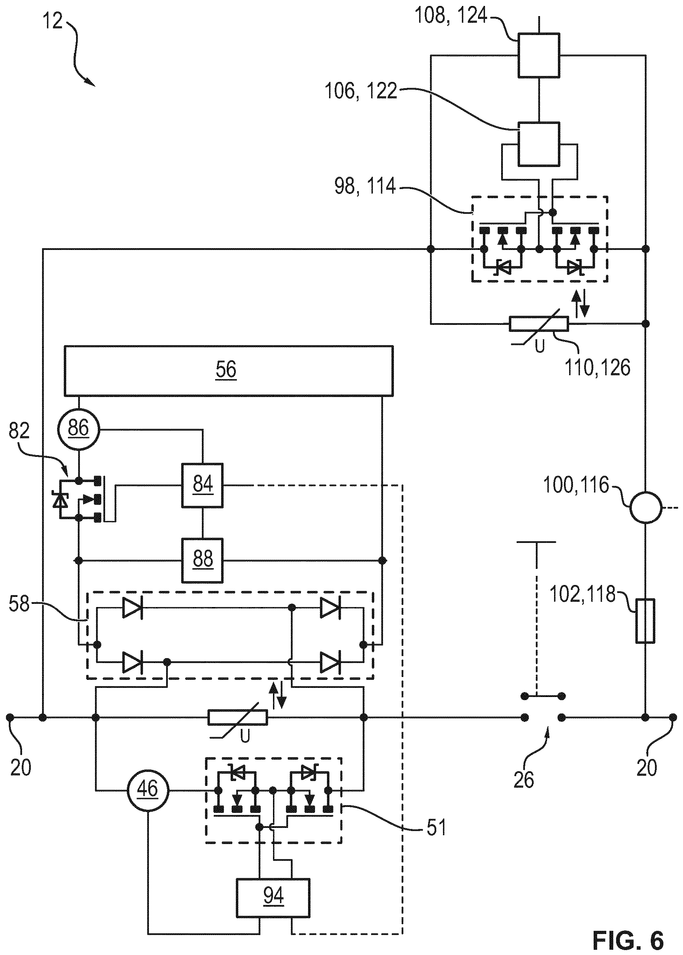

In Figur 6 ist eine weitere Ausgestaltungsform des Schutzschalters 12 dargestellt. Im Vergleich zur vorhergehenden Ausführungsform ist mittels der Reihenschaltung aus der Schaltergruppe 114, des dritten Stromsensors 116 sowie der dritten Sicherung 118 nicht lediglich der mechanische Schalter 26, sondern die Reihenschaltung aus dem mechanischen Schalter 26 sowie dem Widerstandselement 51 und dem Stromsensors 46 überbrückt. Zudem ist die Drossel 112 weggelassen, wobei diese auch hier vorhanden sein kann. Im Vergleich zu der in Figur 4 dargestellten Variante ist die zusätzliche Sicherung 102 auf der gegenüberliegenden Seite des mechanischen Schalters 28 gegen den Hauptstrompfad 18 geführt, sodass die Reihenschaltung aus dem zweiten Widerstandselement 98, des zusätzlichen Stromsensors 100 und der zusätzlichen Sicherung 102 die Reihenschaltung aus dem Stromsensor 46, dem Widerstandselement 51 und der mechanische Schalter 26 überbrückt. Auch bei dieser Variante ist es möglich, dass die Drossel 112 vorhanden ist.

Bei einem Überstrom wird mittels der zusätzlichen Steuereinheit 94 das Widerstandselement 51 angesteuert, sodass dieses nicht mehr stromführend ist. Infolgedessen kommutiert der elektrische Strom auf die zweite Antriebseinheit 56, die einen elektrischen Widerstand aufweist. Daher steigt die über dem zweiten Widerstandselement 98 bzw. der Schaltergruppe 114 abfallende elektrische Spannung an, sodass ein Betrieb der zweiten zusätzlichen Spannungsversorgung 108 bzw. der weiteren Spannungsversorgung 124 erfolgt. Mittels der nunmehr bestromten zweiten zusätzlichen Steuereinheit 106 bzw. weiteren Steuereinheit 122 wird das zweite Widerstandselement 98 bzw. die Schaltergruppe 114 in den elektrisch leitenden Zustand versetzt.

Aufgrund der währenddessen andauernden Bestromung der zweiten Antriebseinheit 56 wird der mechanische Schalter 26 geöffnet. Infolgedessen wird nachfolgend lediglich mittels des zweiten Widerstandselements 98 bzw. der Schaltergruppe 114 der elektrische Strom zwischen den Anschlüssen 20 geführt. Mittels der etwaigen vorhandenen Drossel 112 wird dabei der Stromanstieg über diesen Zweig begrenzt, sodass eine Überbelastung vermieden ist. Nachfolgend wird mittels der zweiten zusätzlichen Steuereinheit 106 bzw. der weiteren Steuereinheit 122 das zweite Widerstandselement 98 bzw. die Schaltergruppe 114 in den elektrisch nichtleitenden Zustand versetzt, sodass der elektrische Stromfluss zwischen den beiden Anschlüssen 20 beendet ist. Bei dieser Varianten erfolgt kein Ausbilden eines Lichtbogens über den mechanischen Schalter 26.

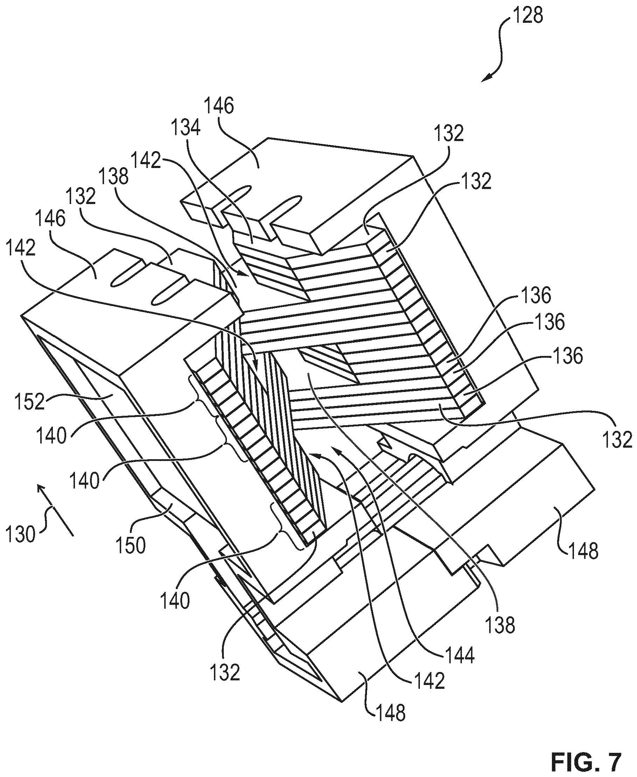

**In** Figur 7 ist perspektivisch eine Löschkammer 128 des mechanischen Schalters 26 dargestellt. Die Löschkammer 128 dient hierbei dem Ablöschen eines bei einem Schaltvorgang des mechanischen Schalters 26 entstehenden Lichtbogens, sofern nicht die anderen vorhandenen Bauteile hierfür herangezogen werden. Die Löschkammer 128 weist mehrere in einer Stapelrichtung 130 übereinander gestapelte Löschstreifen 132 auf. Die Löschstreifen 132 sind aus einer Aluminium-Oxid Keramik gefertigt sowie flächig ausgestaltet und senkrecht zur Stapelrichtung 130 angeordnet. Die Dicke der Löschstreifen 132, also deren Ausdehnung in Stapelrichtung 130, beträgt zwischen 1 mm und 2 mm. Die Löschstreifen 132 liegen direkt aneinander, sodass ein Stapel 134 gebildet ist. Der Stapel 134 weist dabei mehrere in der Stapelrichtung 130 übereinander angeordnete Lagen 136 auf, die somit senkrecht zur Stapelrichtung 130 angeordnet sind.

Jeder der Lagen 136 sind zwei der Löschstreifen 132 zugeordnet. Die beiden Löschstreifen 132 jeder Lage 136 sind hierbei zueinander unterschiedlich, und einer der Löschstreifen 132 ist keilförmig und der verbleibende trapezförmig ausgestaltet. Mit anderen Worten unterscheiden sich die Löschstreifen 132, die jeder der Lagen 136 zugeordnet sind, wobei jedoch jeder Lage 136 die gleichen Löschstreifen 132 zugeordnet sind, also die gleiche Art. Mit anderen Worten weist die Löschkammer 128 zwei unterschiedliche Arten von Löschstreifen 132 auf, nämlich die keilförmigen und die trapezförmigen, und diese sind gleichmäßig auf die Lagen 136 aufgeteilt.

Die beiden Löschstreifen 132 jeder Lage 136 sind zueinander senkrecht zu der Stapelrichtung 130 beabstandet, sodass zwischen diesen ein Schlitz 138 gebildet ist. Jeweils vier der Lagen 136 sind zu jeweils einer Gruppe 140 zusammengefasst, wobei die Löschstreifen 132 jeder Gruppe 140 bündig zueinander angeordnet sind. Die Löschstreifen 132 der jeweils benachbarten Gruppe 140 hingegen sind spiegelverkehrt angeordnet, sodass der Stapel 134 mehrere in der Stapelrichtung 130 übereinanderliegende und voneinander abgetrennte Kammern 142 aufweist, die jeweils mittels der zueinander fluchtenden Schlitze 138 gebildet sind. Aufgrund der Keil- bzw. Trapezform ist dabei bei jeder der Lagen 136 eine Kerbe 144 gebildet, die in die jeweilige Kammern 142 übergehen. Es sind insgesamt vier derartige Gruppen 140 vorhanden.

Der Stapel 134 ist beidseitig mittels jeweils eines Halters 146 umgriffen und somit stabilisiert. Die Halter 146 sind zueinander spiegelbildlich und aus einem Kunststoff erstellt und weisen jeweils einen Fuß 148 auf. Die beiden Halter 146 sind an dem jeweiligen Fuß 148 aneinander befestigt, sodass der Stapel 134 kraftschlüssig zwischen den beiden Haltern 146 sowohl in Stapelrichtung 130 als auch senkrecht hierzu gehalten wird. Auf der dem Stapel 134 gegenüberliegenden Seite weist jeder der Halter 146 eine rechteckförmige topf- oder pfannenformige Aufnahme 150 auf, innerhalb derer im Montagezustand jeweils ein Permanentmagnet 152 einliegt, die jeweils ein Treibelement bilden.

Die Löschkammer 128 ist bezüglich des Festkontakte 28, 30 sowie der Bewegkontakt 34, 36 derart orientiert, dass ein beim Betätigen des mechanischen Schalters 26, also wenn der Antrieb 38 betätigt wird, entstehender Lichtbogen im Bereich der Kerben 144 auf den Stapel 134 trifft. Aufgrund der Wechselwirkung zwischen dem Magnetfeld der Permanentmagneten 152 und dem von dem Lichtbogen erstellten Magnetfeld wird dieser weiter in den Stapel 134 getrieben, nämlich in die einzelnen Kammern 142. Somit bilden sich in den jeweiligen Kammern 142 einliegende Teilabschnitte des Lichtbogens aus, die u-förmig ausgestaltet sind. Die Teilabschnitte sind miteinander verbunden, wobei die Verbindungabschnitte den Stapel 134 auf der Seite der Kerben 144 umgreifen. Folglich weist der Lichtbogen eine vergleichsweise große Länge auf. Aufgrund der Kerben 144 ist dabei ein Umgehen der Löschkammer 128 durch den Lichtbogen nicht möglich. Wegen der Vergrößerung der Länge des Lichtbogens steigt eine zum Aufrechterhalten erforderliche elektrische Spannung an.

Ferner erfolgt ein Wärmeeintrag von dem den Lichtbogen bildenden Plasma in die einzelnen Löschstreifen 132, sodass der Lichtbogen abgekühlt wird. Aufgrund der verwendeten Keramik wird hierbei die Wärme vergleichsweise effektiv abgeführt und der Lichtbogen somit gekühlt. Wegen der Abkühlung steigt die zum Aufrechterhalten des Lichtbogens erforderliche elektrische Spannung ebenfalls an. Da die einzelnen Löschstreifen 132 zueinander separat sind, bildet sich hierbei in dem Stapel 134 auch bei einer ungleichmäßigen Erwärmung der einzelnen Löschstreifen 132 keine übermäßige mechanische Spannung aus, die zu einer Zerstörung führen könnte.

Falls die Drossel 112 vorhanden ist, wie beispielsweise bei der in Figur 5 dargestellten Ausführungsform sowie dort beschriebenen, nicht dargestellten Abwandlung, oder bei der nicht dargestellten Weiterbildung der weiteren Ausführungsform der Figur 6, wird diese bei einer Weiterbildung ebenfalls zum Treiben des Lichtbogens in die Kammern 142 herangezogen. Hierbei ist die Drossel 112 entsprechend positioniert und wirkt somit als sogenannte Blasfeldspule. Somit ist es möglich, dass die Permanentmagneten 152 entfallen, oder diese sind zusätzlich zur Unterstützung vorhanden. Die Drossel 112 ist jeweils lediglich dann stromführend, wenn der mechanische Schalter 26 betätigt wird. Somit wird das Magnetfeld zum Treiben des Lichtbogens in die Kammern 142 lediglich dann erzeugt, wenn auch tatsächlich der Lichtbogen vorhanden ist oder zumindest entstehen könnte.

### Bezugszeichenliste

- 2: Kraftfahrzeug
- 4: Rad
- 6: Hauptantrieb
- 8: Hochvoltbordnetz
- 10: Hochvoltbatterie
- 12: Schutzschalter
- 14: Niedervoltbordnetz
- 16: Batterie
- 18: Hauptstrompfad
- 20: Anschluss
- 22: weiterer Hauptstrompfad
- 24: weiterer Anschluss
- 26: mechanischer Schalter
- 28: Festkontakt
- 30: weiterer Festkontakt
- 32: Kontaktbrücke
- 34: Bewegkontakt
- 36: weiterer Bewegkontakt
- 38: Antrieb
- 39: erste Antriebseinheit
- 40: Steuereinheit
- 42: Steuerkreis
- 44: Energiespeicher
- 46: Stromsensor
- 48: erster Spannungssensor
- 50: zweiter Spannungssensor
- 51: Widerstandselement
- 52: dritter Spannungssensor
- 54: vierter Spannungssensor
- 56: zweite Antriebseinheit
- 58: Gleichrichter

- 60: Zener-Diode
- 62: Sicherung
- 64: Achse
- 66: Halter
- 68: Kurzschlussblech
- 70: weiterer Halter
- 72: Stab
- 74: Permanentmagnet
- 76: magnetischer Pol
- 78: elektrische Spule
- 80: weitere elektrische Spule
- 82: zweiter Schalter
- 84: zweite Steuereinheit
- 86: zweiter Stromsensor
- 88: zweite Spannungsversorgung
- 90: Diode
- 92: zusätzlicher Schalter
- 94: zusätzliche Steuereinheit
- 96: Überspannungsschutz
- 98: zweites Widerstandselement
- 100: zusätzlicher Stromsensor
- 102: zusätzliche Sicherung
- 104: zweiter zusätzlicher Schalter
- 106: zweite zusätzliche Steuereinheit
- 108: zweite zusätzliche Spannungsversorgung
- 110: zweiter Überspannungsschutz
- 112: Drossel
- 114: Schaltergruppe
- 116: dritter Stromsensor
- 118: dritte Sicherung
- 120: Halbleiterschalter
- 122: weitere Steuereinheit
- 124: weitere Spannungsversorgung

- 126: weiterer Überspannungsschutz
- 128: Löschkammer
- 130: Stapelrichtung
- 132: Löschstreifen
- 134: Stapel
- 136: Lage
- 138: Schlitz
- 140: Gruppe
- 142: Kammer
- 144: Kerbe
- 146: Halter
- 148: Fuß
- 150: Aufnahme
- 152: Permanentmagnet

## Patentansprüche

1. Schutzschalter (12) mit einem in einen Hauptstrompfad (18), der sich zwischen zwei Anschlüssen (20) erstreckt, eingebrachten mechanischen Schalter (26), der einen Festkontakt (28) und einen an einer dazu beweglich gelagerten Kontaktbrücke (32) angebundenen Bewegkontakt (34) aufweist, und mit einem Antrieb (38), der in Wirkverbindung mit der Kontaktbrücke (32) ist, sodass es mittels Betätigung des Antriebs (38) möglich ist, die Kontaktbrücke (32) von einer Positionen in eine andere Position zu bewegen, wobei der Antrieb (38) eine erste Antriebseinheit (39) und eine zweite Antriebseinheit (56) aufweist, die separat voneinander betreibbar oder betrieben sind, sodass die Kontaktbrücke (32) bewegt wird, wobei die erste Antriebseinheit (39) mittels eines Steuerkreises (42) bestromt ist, und wobei die zweite Antriebseinheit (56) parallel zu einem in den Hauptstrompfad (18) eingebrachten Widerstandselement (51) geschaltet ist,
**dadurch gekennzeichnet,**
**dass** das Widerstandselement (51) einen zusätzlichen Schalter (92) umfasst, der mittels einer zusätzlichen Steuereinheit (94) angesteuert ist.

2. Schutzschalter (12) nach Anspruch 1,
**dadurch gekennzeichnet,**
**dass** die zweite Antriebseinheit (56) über einen Gleichrichter (58) mit dem Hauptstrompfad (18) verbunden ist.

3. Schutzschalter (12) nach Anspruch 1 oder 2,
**dadurch gekennzeichnet,**
**dass** zwischen die zweite Antriebseinheit (56) und den Hauptstrompfad (18) eine Zener-Diode (60) und/oder ein zweiter Schalter (82) geschaltet ist.

4. Schutzschalter (12) nach einem der Ansprüche 1 bis 3,
**gekennzeichnet durch**
eine aus dem Steuerkreis (42) gespeiste Steuereinheit (40), mittels derer die erste Antriebseinheit (39) bestromt ist.

5. Schutzschalter (12) nach einem der Ansprüche 1 bis 4,
**dadurch gekennzeichnet,**
**dass** parallel zu dem mechanischen Schalter (26) eine Sicherung (62) geschaltet ist.

6. Schutzschalter (12) nach einem der Ansprüche 1 bis 5,
**dadurch gekennzeichnet,**
**dass** ein Halbleiterschalter (120) parallel zu dem mechanischen Schalter (26) oder der Reihenschaltung aus dem mechanischen Schalter (26) und dem Widerstandselement (51) geschaltet ist.

7. Schutzschalter (12) nach einem der Ansprüche 1 bis 6,
**dadurch gekennzeichnet**,
der mechanische Schalter (26) eine Löschkammer (128) aufweist, die mehrere flächige, parallel zueinander angeordnete und in einer Stapelrichtung (130) übereinandergestapelte Löschstreifen (132) umfasst, die aus einer Keramik erstellt sind.

8. Kraftfahrzeug (2) mit einem Hochvoltbordnetz (8), und mit einem Niedervoltbordnetz (14) und mit einem Schutzschalter (12) nach einem der Ansprüche 1 bis 7, wobei der Steuerkreis (42) elektrisch mit dem Niedervoltbordnetz (14) verbunden ist, und wobei das Hochvoltbordnetz (8) den Hauptstrompfad (18) aufweist.

## Claims

1. Circuit breaker (12) having a mechanical switch (26), which is incorporated into a main current path (18) that extends between two connections (20), and which has a fixed contact (28) and a moving contact (34) that is connected to a contact bridge (32) mounted so as to be able to move relative thereto, and having a drive (38) that is operatively connected to the contact bridge (32), with the result that it is possible to move the contact bridge (32) from one position to another position by actuating the drive (38), wherein the drive (38) has a first drive unit (39) and a second drive unit (56) that are able to be operated or are operated separately from one another such that the contact bridge (32) is moved, wherein the first drive unit (39) is energized by means of a control circuit (42), and wherein the second drive unit (56) is connected in parallel with a resistor element (51) incorporated into the main current path (18),
**characterized**
**in that** the resistor element (51) comprises an additional switch (92) that is actuated by means of an additional control unit (94).

2. Circuit breaker (12) according to Claim 1, **characterized**
**in that** the second drive unit (56) is connected to the main current path (18) via a rectifier (58).

3. Circuit breaker (12) according to Claim 1 or 2, **characterized**
**in that** a Zener diode (60) and/or a second switch (82) are/is connected between the second drive unit (56) and the main current path (18).

4. Circuit breaker (12) according to one of Claims 1 to 3,
**characterized by**
a control unit (40), which is fed from the control circuit (42) and by means of which the first drive unit (39) is energized.

5. Circuit breaker (12) according to one of Claims 1 to 4,
**characterized in that** a fuse (62) is connected in parallel with the mechanical switch (26).

6. Circuit breaker (12) according to one of Claims 1 to 5,
**characterized**
**in that** a semiconductor switch (120) is connected in parallel with the mechanical switch (26) or the series connection comprising the mechanical switch (26) and the resistor element (51).

7. Circuit breaker (12) according to one of Claims 1 to 6,
**characterized**
**in that** the mechanical switch (26) has an extinguishing chamber (128) that comprises a plurality of flat extinguishing strips (132) that are arranged in parallel with one another, are stacked one above another in a stacking direction (130) and are made of a ceramic.

8. Motor vehicle (2), having a high-voltage on-board electrical system (8), and having a low-voltage on-board electrical system (14), and having a circuit breaker (12) according to one of Claims 1 to 7, wherein the control circuit (42) is electrically connected to the low-voltage on-board electrical system (14), and wherein the high-voltage on-board electrical system (8) comprises the main current path (18).

## Revendications

1. Disjoncteur (12) comprenant un commutateur mécanique (26) inséré dans un chemin de courant principal (18) s'étendant entre deux bornes (20), ledit commutateur comportant un contact fixe (28) et un contact mobile (34) relié à un pont de contact (32) monté mobile sur celui-ci, et comprenant un entraînement (38) relié fonctionnellement au pont de contact (32) de telle sorte que, par actionnement de l'entraînement (38), il est possible de déplacer le pont de contact (32) d'une position à une autre, dans lequel l'entraînement (38) comprend une première unité d'entraînement (39) et une deuxième unité d'entraînement (56), qui sont ou peuvent être actionnées séparément l'une de l'autre, de sorte que le pont de contact (32) est déplacé, dans lequel la première unité d'entraînement (39) est alimentée par un circuit de commande (42) et dans lequel la deuxième unité d'entraînement (56) est connectée en parallèle à un élément de résistance (51) inséré dans le chemin de courant principal (18).
**caractérisé en ce**
**que** l'élément de résistance (51) comprend un commutateur supplémentaire (92), qui est commandé au moyen d'une unité de commande supplémentaire (94).

2. Disjoncteur (12) selon la revendication 1, **caractérisé en ce**
**que** la deuxième unité d'entraînement (56) est connectée au chemin de courant principal (18) via un redresseur (58).

3. Disjoncteur (12) selon la revendication 1 ou 2, **caractérisé en ce**
**qu'**une diode Zener (60) et/ou un deuxième commutateur (82) est/sont connectée/connectés entre la deuxième unité d'entraînement (56) et le chemin de courant principal (18).

4. Disjoncteur (12) selon l'une quelconque des revendications 1 à 3,
**caractérisé par**
une unité de commande (40) alimentée par le circuit de commande (42), au moyen de laquelle la première unité d'entraînement (39) est alimentée.

5. Disjoncteur (12) selon l'une quelconque des revendications 1 à 4,
**caractérisé en ce**
**qu'**un fusible (62) est connecté en parallèle au commutateur mécanique (26).

6. Disjoncteur (12) selon l'une quelconque des revendications 1 à 5,
**caractérisé en ce**
**qu'**un commutateur à semi-conducteur (120) est connecté en parallèle au commutateur mécanique (26) ou au circuit série comprenant le commutateur mécanique (26) et l'élément de résistance (51).

7. Disjoncteur (12) selon l'une quelconque des revendications 1 à 6,
**caractérisé en ce**
**que** le commutateur mécanique (26) comporte une chambre d'extinction (128), qui comprend plusieurs bandes d'extinction (132) plates qui sont disposées parallèlement les unes aux autres et empilées les unes au-dessus des autres dans une direction d'empilement (130) et qui sont fabriquées à partir d'une céramique.

8. Véhicule automobile (2) comprenant un réseau de bord haute tension (8), un réseau de bord basse tension (14) et un disjoncteur (12) selon l'une des revendications 1 à 7, dans lequel le circuit de commande (42) est connecté électriquement au réseau de bord basse tension (14), et dans lequel le réseau de bord haute tension (8) comporte le chemin de courant principal (18).
